(19) **Europäisches Patentamt European Patent Office Office européen des brevets**

(11) **EP 4 651 584 A1**

(12) **EUROPEAN PATENT APPLICATION**
published in accordance with Art. 153(4) EPC

(43) Date of publication:
**19.11.2025 Bulletin 2025/47**

(21) Application number: **24759619.0**

(22) Date of filing: **18.02.2024**

(51) International Patent Classification (IPC):
**H04W 56/00** (2009.01)

(52) Cooperative Patent Classification (CPC):
**H04L 5/00; H04W 56/00**

(86) International application number:
**PCT/CN2024/077413**

(87) International publication number:
**WO 2024/174942 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.02.2023 CN 202310170983**
**10.04.2023 CN 202310417897**

(71) Applicant: **Huawei Technologies Co., Ltd.**
**Shenzhen, Guangdong 518129 (CN)**

(72) Inventors:
• **WEI, Xiuhong**
  **Shenzhen, Guangdong 518129 (CN)**
• **BI, Shuangkaisheng**
  **Shenzhen, Guangdong 518129 (CN)**
• **LI, Xueru**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD, AND APPARATUS**

(57) This application relates to a communication method and apparatus. A first terminal device receives a first sidelink synchronization signal from a second terminal device in M frequency domain units, where the M frequency domain units are a part of all frequency domain units supported by the first terminal device, and M is a positive integer. When a first condition is satisfied, the first terminal device selects the second terminal device as a synchronization source. The first terminal device sends a second sidelink synchronization signal based on the first sidelink synchronization signal. According to embodiments of this application, all terminal devices on different channels can be synchronized with the second terminal device, so that terminal devices on a plurality of channels are synchronized, and interference between terminal devices is reduced.

FIG. 4

## Description

CROSS-REFERENCE TO RELATED APPLICATIONS

This application claims priority to Chinese Patent Application No. 202310170983.2, filed with the China National Intellectual Property Administration on February 20, 2023 and entitled "SIDELINK SYNCHRONIZATION METHOD AND SENSING DEVICE", which is incorporated herein by reference in its entirety. This application claims priority to Chinese Patent Application No. 202310417897.7, filed with the China National Intellectual Property Administration on April 10, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

A sensing user equipment (user equipment, UE) may sense a target in a self-sending and self-receiving mode. For example, the sensing UE may send a sensing reference signal, and may receive an echo signal reflected after the sensing reference signal reaches the target. The sensing UE may sense information such as a distance to the target and a speed of the target by comparing the sensing reference signal with the echo signal.

One sensing UE may operate on one or more channels (channels), different sensing UEs may operate on a same channel or different channels, and different sensing UEs may support a same quantity of channels or different quantities of channels. A bandwidth of one channel is, for example, 540 MHz. To avoid mutual interference between different sensing UEs, sensing UEs operating on a same channel should keep synchronized. Correspondingly, if one sensing UE operates on a plurality of channels, the sensing UE should keep synchronized with a sensing UE on each channel in the plurality of channels, but this cannot be implemented currently.

In this case, there is a high possibility that the sensing UE operating on the plurality of channels cannot be synchronized with sensing UEs on some of the channels. As a result, the sensing UEs on the some channels may interfere with each other.

SUMMARY

Embodiments of this application provide a communication method and apparatus, to reduce interference between sensing UEs.

According to a first aspect, a first communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a first terminal device. The method includes: receiving a first sidelink synchronization signal from a second terminal device in M frequency domain units, where the M frequency domain units are a part of all frequency domain units supported by the first terminal device, and M is a positive integer; when a first condition is satisfied, selecting the second terminal device as a synchronization source; and sending a second sidelink synchronization signal based on the first sidelink synchronization signal.

In this embodiment of this application, the first terminal device is, for example, a sensing terminal device, or may be another type of terminal device, for example, a communication terminal device. If the first terminal device receives the first sidelink synchronization signal from the second terminal device in the part of the frequency domain units, the first terminal device may then send the second sidelink synchronization signal based on the first sidelink synchronization signal, so that after receiving the second sidelink synchronization signal, another terminal device in a frequency domain unit in which the first terminal device operates can be synchronized with the first terminal device. In addition, the first terminal device is synchronized with the second terminal device, so that all terminal devices on different channels can be synchronized with the second terminal device, so that terminal devices on a plurality of channels are synchronized, and interference between terminal devices is reduced.

In an optional implementation, the second sidelink synchronization signal satisfies one or more of the following: an identity of an SLSS sequence included in the second sidelink synchronization signal is determined based on an identity of an SLSS sequence included in the first sidelink synchronization signal; an identity of an SLSS sequence included in the second sidelink synchronization signal belongs to an identity set associated with a priority group corresponding to the second sidelink synchronization signal, where a priority of the priority group corresponding to the second sidelink synchronization signal is higher than or equal to a priority of a priority group corresponding to the first sidelink synchronization signal; or frame synchronization information indicated by the second sidelink synchronization signal is determined based on frame synchronization information indicated by the first sidelink synchronization signal. The second sidelink synchronization signal may be determined based on the first sidelink synchronization signal. For example, an identity of an SLSS may be selected for the second sidelink synchronization signal from the identity set associated with the priority group corresponding to the second sidelink synchronization signal. The priority of the priority group corresponding to the second sidelink synchronization signal is higher than or equal to the priority of the priority group corresponding to the first sidelink synchronization signal. This is equivalent to that the first terminal device may forward a sidelink synchronization signal based on the higher priority. In this way, another UE can be synchronized with a synchronization source with a higher priority.

In an optional implementation, if an operating bandwidth corresponding to the first sidelink synchronization signal is less than or equal to an operating bandwidth of the first terminal device, the priority group corresponding to the second sidelink synchronization signal is a priority group corresponding to the operating bandwidth of the first terminal device; or if an operating bandwidth corresponding to the first sidelink synchronization signal is greater than an operating bandwidth of the first terminal device, the priority group corresponding to the second sidelink synchronization signal is the priority group corresponding to the first sidelink synchronization signal. A manner in which the first terminal device determines the priority group corresponding to the second sidelink synchronization signal is provided. This is equivalent to that the first terminal device may select a priority group with a higher priority as the priority group corresponding to the second sidelink synchronization signal.

In an optional implementation, the operating bandwidth corresponding to the first sidelink synchronization signal is determined based on the identity of the SLSS sequence included in the first sidelink synchronization signal. The operating bandwidth corresponding to the first sidelink synchronization signal is, for example, an operating bandwidth corresponding to an identity set to which the identity of the SLSS included in the first sidelink synchronization signal belongs. The identity set, the operating bandwidth, and the priority group may be in one-to-one correspondence.

In an optional implementation, sending the second sidelink synchronization signal includes: sending the second sidelink synchronization signal in N frequency domain units, where the N frequency domain units are remaining frequency domain units other than the M frequency domain units in all the frequency domain units supported by the first terminal device, and N is a positive integer. The first terminal device receives the first sidelink synchronization signal in the part of the frequency domain units, and may send the second sidelink synchronization signal in the remaining frequency domain units, so that another UE in the remaining frequency domain units can also receive the sidelink synchronization signal.

In an optional implementation, the first condition includes one or more of the following: the priority of the priority group corresponding to the first sidelink synchronization signal is higher than a priority of a priority group corresponding to another sidelink synchronization signal received by the first terminal device; a plurality of sidelink synchronization signals with a highest priority that are received by the first terminal device include the first sidelink synchronization signal, and the second terminal device is a device that is with a highest received power and that is determined by the first terminal device by measuring transmit ends of the plurality of sidelink synchronization signals; or a plurality of sidelink synchronization signals with a highest priority that are received by the first terminal device include the first sidelink synchronization signal, and the first sidelink synchronization signal is a sidelink synchronization signal that is in the plurality of sidelink synchronization signals and that indicates a smallest hop count. The first terminal device may select a synchronization source based on a priority. If priorities of a plurality of synchronization sources are the same, the first terminal device may then select a better synchronization source as much as possible by using another parameter, for example, a parameter like a received power and/or a hop count.

In an optional implementation, the priority of the priority group corresponding to the first sidelink synchronization signal is higher than or equal to a priority of the priority group corresponding to the operating bandwidth of the first terminal device. For example, if the priority of the priority group corresponding to the first sidelink synchronization signal is lower than the priority of the priority group corresponding to the operating bandwidth of the first terminal device, the first terminal device may not select a transmit end of the first sidelink synchronization signal as a synchronization source. It may be understood as that the first terminal device does not select a synchronization source whose priority is lower than the priority of the priority group corresponding to the operating bandwidth of the first terminal device.

In an optional implementation, a synchronization resource occupied by the first sidelink synchronization signal represents the hop count indicated by the first sidelink synchronization signal. The first sidelink synchronization signal may indicate the hop count in a plurality of manners. For example, the first sidelink synchronization signal may include information indicating the hop count, or may indicate the hop count by using a synchronization resource. If the synchronization resource indicates the hop count, information dedicated to indicating the hop count does not need to be added. This helps reduce transmission overheads.

In an optional implementation, the first sidelink synchronization signal occupies an $n^{th}$ synchronization resource in a synchronization period, and the $n^{th}$ synchronization resource occupied by the first sidelink synchronization signal represents that the hop count indicated by the first sidelink synchronization signal is n-1. The hop count is indicated by using an index of the synchronization resource, and the indication is clear.

In an optional implementation, the identity of the SLSS sequence included in the first sidelink synchronization signal represents the hop count indicated by the first sidelink synchronization signal. The first sidelink synchronization signal may indicate the hop count in a plurality of manners, and indicating the hop count by using an identity of an SLSS sequence (or referred to as an SLSS) is one of the manners. If the identity of the SLSS sequence indicates the hop count, information dedicated to indicating the hop count does not need to be added. This helps reduce transmission overheads.

In an optional implementation, an identity set to which the identity of the SLSS sequence included in the first sidelink synchronization signal belongs includes at least two identity sub-groups, the identity set is an identity set corresponding to an operating bandwidth of an initial synchronization source associated with the first sidelink synchronization signal, the identity of the SLSS sequence included in the first sidelink synchronization signal belongs to a first identity sub-group in the at least two identity sub-groups, and different identities included in the first identity sub-group indicate different hop counts.

In an optional implementation, the method further includes: when a second condition is satisfied, reselecting a synchronization source, where the second condition includes one or more of the following: a third sidelink synchronization signal is received, a priority of a priority group corresponding to the third sidelink synchronization signal is higher than the priority of the priority group corresponding to the second sidelink synchronization signal, and a received power obtained by the first terminal device by measuring a transmit end of the third sidelink synchronization signal is greater than a first threshold; a third sidelink synchronization signal is received, a priority of a priority group corresponding to the third sidelink synchronization signal is the same as the priority of the priority group corresponding to the second sidelink synchronization signal, and a difference between a received power obtained by the first terminal device by measuring a transmit end of the third sidelink synchronization signal and a received power obtained by the first terminal device by measuring the second terminal device is greater than a second threshold; or a received power obtained by the first terminal device by measuring the second terminal device is less than a third threshold. Even if the first terminal device selects a synchronization source, when a corresponding condition is satisfied, the first terminal device may reselect a synchronization source. For example, the first terminal device may synchronize with a synchronization source with a higher priority as much as possible, or may keep a channel condition between the synchronization source and the first terminal device as stable as possible, to improve synchronization precision.

In an optional implementation, the method further includes: determining that a received power obtained by the first terminal device by measuring a first synchronization source is greater than a fourth threshold, where the first synchronization source is the reselected synchronization source; and stopping sending the second sidelink synchronization signal. If signal quality of the synchronization source reselected by the first terminal device is good, a sidelink synchronization signal sent by the synchronization source can satisfy a synchronization requirement of another UE, and the first terminal device may stop sending the sidelink synchronization signal, to reduce power consumption.

In an optional implementation, the method further includes: receiving a fourth sidelink synchronization signal, where a received power obtained by the first terminal device by measuring a transmit end of the fourth sidelink synchronization signal is greater than an eighth threshold, and a priority of a priority group corresponding to the fourth sidelink synchronization signal is higher than the priority of the priority group corresponding to the second sidelink synchronization signal; stopping sending the second sidelink synchronization signal; reselecting the transmit end of the fourth sidelink synchronization signal as a synchronization source; and sending a fifth sidelink synchronization signal based on the fourth sidelink synchronization signal. The first terminal device receives sidelink synchronization signals with different priorities. If a corresponding condition is satisfied, the first terminal device may send a sidelink synchronization signal based on a sidelink synchronization signal with a higher priority, so that the sent sidelink synchronization signal has a higher priority. In this way, more terminal devices can be easily synchronized with a synchronization source with a higher priority in a uniform manner.

In an optional implementation, a received power obtained by the first terminal device by measuring a transmit end of the first sidelink synchronization signal is less than a ninth threshold.

In an optional implementation, the fifth sidelink synchronization signal satisfies one or more of the following: an identity of an SLSS sequence included in the fifth sidelink synchronization signal is determined based on an identity of an SLSS sequence included in the fourth sidelink synchronization signal; and/or frame synchronization information indicated by the fifth sidelink synchronization signal is determined based on frame synchronization information indicated by the fourth sidelink synchronization signal. For this, refer to the foregoing descriptions of the condition that the second sidelink synchronization signal satisfies.

In an optional implementation, sending the second sidelink synchronization signal includes: sending the second sidelink synchronization signal in all the frequency domain units supported by the first terminal device. The first terminal device receives the first sidelink synchronization signal in the part of the frequency domain units, and may send the second sidelink synchronization signal in all the frequency domain units, so that more UEs can receive the sidelink synchronization signal, to complete synchronization.

In an optional implementation, after sending the second sidelink synchronization signal, the method further includes: receiving a sixth sidelink synchronization signal in all the frequency domain units supported by the first terminal device, where a priority of a priority group corresponding to the sixth sidelink synchronization signal is higher than or equal to the priority of the priority group corresponding to the second sidelink synchronization signal, and a received power obtained by the first terminal device by measuring a transmit end of the sixth sidelink synchronization signal is greater than a seventh threshold; and stopping sending the second sidelink synchronization signal. It may be understood as that, if the first terminal device receives a sidelink synchronization signal with a higher priority, and a received power obtained by the first terminal device by measuring a transmit end of the sidelink synchronization signal is greater than the seventh threshold, it indicates that coverage of the transmit end is large enough. In this case, another terminal device can implement synchronization based on the sidelink synchronization signal from the transmit end, and the first terminal device may not need to send a sidelink synchronization signal any more, to reduce power consumption of the first terminal device.

In an optional implementation, that the priority of the priority group corresponding to the sixth sidelink synchronization signal is higher than or equal to the priority of the priority group corresponding to the second sidelink synchronization signal includes: an operating bandwidth corresponding to the sixth sidelink synchronization signal is greater than or equal to an operating bandwidth corresponding to the second sidelink synchronization signal. Terminal devices may be grouped into one or more priority groups based on operating bandwidths of the terminal devices, and one priority group may correspond to one operating bandwidth and one identity set. A larger operating bandwidth indicates a higher priority of a priority group corresponding to the operating bandwidth. An operating bandwidth corresponding to a sidelink synchronization signal may be an operating bandwidth corresponding to an identity set to which an identity of an SLSS sequence included in the sidelink synchronization signal belongs. Because the priority of the priority group corresponding to the sixth sidelink synchronization signal is higher than or equal to the priority of the priority group corresponding to the second sidelink synchronization signal, the operating bandwidth corresponding to the sixth sidelink synchronization signal is greater than or equal to the operating bandwidth corresponding to the second sidelink synchronization signal.

According to a second aspect, a second communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a second terminal device. The second terminal device and a first terminal device may be a same device, or may be different devices. The method includes: sending a second sidelink synchronization signal; receiving a seventh sidelink synchronization signal in all frequency domain units supported by the second terminal device, where a priority of a priority group corresponding to the seventh sidelink synchronization signal is higher than or equal to a priority of a priority group corresponding to the second sidelink synchronization signal, and a received power obtained by the second terminal device by measuring a transmit end of the seventh sidelink synchronization signal is greater than a seventh threshold; and stopping sending the second sidelink synchronization signal. For example, the second terminal device may send the second sidelink synchronization signal in the manner described in the first aspect, or the second terminal device may send the second sidelink synchronization signal in another scenario.

In an optional implementation, that the priority of the priority group corresponding to the seventh sidelink synchronization signal is higher than or equal to the priority of the priority group corresponding to the second sidelink synchronization signal includes: an operating bandwidth corresponding to the seventh sidelink synchronization signal is greater than or equal to an operating bandwidth corresponding to the second sidelink synchronization signal.

For technical effects brought by the second aspect or the optional implementations, refer to the descriptions of the technical effects of the first aspect or the corresponding implementations.

According to a third aspect, a third communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a third terminal device. The third terminal device and a first terminal device may be a same device, or may be different devices. The method includes: receiving an eighth sidelink synchronization signal and a first sidelink synchronization signal, where a priority of a priority group corresponding to the eighth sidelink synchronization signal is higher than a priority of a priority group corresponding to the first sidelink synchronization signal, and a received power obtained by a second terminal device by measuring a transmit end of the eighth sidelink synchronization signal is greater than an eighth threshold; selecting the transmit end of the eighth sidelink synchronization signal as a synchronization source; and sending a ninth sidelink synchronization signal based on the eighth sidelink synchronization signal.

In an optional implementation, that the priority of the priority group corresponding to the eighth sidelink synchronization signal is higher than or equal to the priority of the priority group corresponding to the first sidelink synchronization signal includes: an operating bandwidth corresponding to the eighth sidelink synchronization signal is greater than or equal to an operating bandwidth corresponding to the first sidelink synchronization signal.

In an optional implementation, a received power obtained by the second terminal device by measuring the first sidelink synchronization signal is less than a ninth threshold.

In an optional implementation, the ninth sidelink synchronization signal satisfies one or more of the following: an identity of an SLSS sequence included in the ninth sidelink synchronization signal is determined based on an identity of an SLSS sequence included in the eighth sidelink synchronization signal; and/or frame synchronization information indicated by the ninth sidelink synchronization signal is determined based on frame synchronization information indicated by the eighth sidelink synchronization signal.

For technical effects brought by the third aspect or the optional implementations, refer to the descriptions of the technical effects of the first aspect or the corresponding implementations.

According to a fourth aspect, a fourth communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a second terminal device. The second terminal device and a first terminal device may be a same device, or may be different devices. The method includes: receiving a tenth sidelink synchronization signal and an eleventh sidelink synchronization signal; and if a difference between a synchronization time domain position indicated by the tenth sidelink synchronization signal and a synchronization time domain position indicated by the eleventh sidelink synchronization signal is greater than a tenth threshold, and a priority of a priority group corresponding to the tenth sidelink synchronization signal is higher than or equal to a priority of a transmit end of the eleventh sidelink synchronization signal, sending a twelfth sidelink synchronization signal in all or a part of frequency domain units supported by the second terminal device. If a deviation value of synchronization information indicated by sidelink synchronization signals with different priorities that are received by the second terminal device is greater than a specific threshold, the second terminal device may send a sidelink synchronization signal based on a sidelink synchronization signal with a higher priority, so that more terminal devices can be synchronized with a synchronization source with a higher priority in a uniform manner, to implement global synchronization.

In an optional implementation, that the priority of the priority group corresponding to the tenth sidelink synchronization signal is higher than or equal to a priority of a priority group corresponding to the eleventh sidelink synchronization signal includes: an operating bandwidth corresponding to the tenth sidelink synchronization signal is greater than or equal to an operating bandwidth corresponding to the eleventh sidelink synchronization signal.

In an optional implementation, the twelfth sidelink synchronization signal is determined based on the tenth sidelink synchronization signal, where the priority of the priority group corresponding to the tenth sidelink synchronization signal is higher than a priority of a priority group corresponding to the twelfth sidelink synchronization signal; and/or the priority of the priority group corresponding to the tenth sidelink synchronization signal is equal to the priority of the priority group corresponding to the twelfth sidelink synchronization signal, and a hop count indicated by the tenth sidelink synchronization signal is smaller than a hop count indicated by the twelfth sidelink synchronization signal, where a hop count indicated by a sidelink synchronization signal is a hop count between a transmit end of the sidelink synchronization signal and an initial synchronization source associated with the sidelink synchronization signal. If priorities of two sidelink synchronization signals received by the second terminal device are different, the second terminal device may send a sidelink synchronization signal based on a sidelink synchronization signal with a higher priority, so that more terminal devices can be synchronized with a synchronization source with a higher priority. Alternatively, if priorities of two sidelink synchronization signals received by the second terminal device are the same, the second terminal device may send a sidelink synchronization signal based on a sidelink synchronization signal that indicates a smaller hop count, to improve synchronization precision.

In an optional implementation, the twelfth sidelink synchronization signal satisfies one or more of the following: an identity of an SLSS sequence included in the twelfth sidelink synchronization signal is determined based on an identity of an SLSS sequence included in the tenth sidelink synchronization signal; and/or frame synchronization information indicated by the twelfth sidelink synchronization signal is determined based on frame synchronization information indicated by the tenth sidelink synchronization signal.

In an optional implementation, a synchronization resource occupied by the tenth sidelink synchronization signal represents the hop count indicated by the tenth sidelink synchronization signal.

In an optional implementation, the tenth sidelink synchronization signal occupies an $n^{th}$ synchronization resource in a synchronization period, and the $n^{th}$ synchronization resource occupied by the tenth sidelink synchronization signal represents that the hop count indicated by the tenth sidelink synchronization signal is n-1.

In an optional implementation, the identity of the SLSS sequence included in the tenth sidelink synchronization signal represents the hop count indicated by the tenth sidelink synchronization signal.

In an optional implementation, an identity set to which the identity of the SLSS sequence included in the tenth sidelink synchronization signal belongs includes at least two identity sub-groups, the identity set is an identity set corresponding to an operating bandwidth of an initial synchronization source associated with the tenth sidelink synchronization signal, the identity of the SLSS sequence included in the tenth sidelink synchronization signal belongs to a first identity sub-group in the at least two identity sub-groups, and different identities included in the first identity sub-group indicate different hop counts.

For technical effects brought by the fourth aspect or some optional implementations, refer to the descriptions of the technical effects of the first aspect or the corresponding implementations.

According to a fifth aspect, a fifth communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a first terminal device. The first terminal device and the foregoing first terminal device may be a same device, or may be different devices. The method includes: determining that a fourth condition is satisfied; selecting a local clock of the first terminal device as a synchronization source; sending a thirteenth sidelink synchronization signal, where an identity of an SLSS sequence included in the thirteenth sidelink synchronization signal is included in a first identity set, and the first identity set is an identity set corresponding to a priority group corresponding to an operating bandwidth of the first terminal device.

In an optional implementation, the fourth condition includes one or more of the following: the first terminal device receives (or finds) no sidelink synchronization signal; the first terminal device receives no synchronization signal from an access network device and a GNSS; or the first terminal device receives no sidelink synchronization signal whose priority of a corresponding priority group is higher than or equal to a priority of the priority group corresponding to the operating bandwidth of the first terminal device. It may be understood as that, if the first terminal device receives no synchronization signal that can be used for synchronization, the first terminal device may be used as a synchronization source to send a sidelink synchronization signal. In this way, the first terminal device completes synchronization, and more terminal devices can also be synchronized.

In an optional implementation, the method further includes: receiving a fourteenth sidelink synchronization signal; and if a priority of a priority group corresponding to the fourteenth sidelink synchronization signal is higher than a priority of a priority group corresponding to the thirteenth sidelink synchronization signal, and a received power obtained by the first terminal device by measuring a transmit end of the fourteenth sidelink synchronization signal is greater than a sixth threshold, selecting the transmit end of the fourteenth sidelink synchronization signal as a synchronization source; or if a priority of a priority group corresponding to the fourteenth sidelink synchronization signal is the same as a priority of a priority group corresponding to the thirteenth sidelink synchronization signal, and an identity of an SLSS sequence included in the fourteenth sidelink synchronization signal is smaller than an identity of an SLSS sequence included in the eleventh sidelink synchronization signal, selecting a transmit end of the fourteenth sidelink synchronization signal as a synchronization source. The first terminal device may reselect a synchronization source. For example, the first terminal device may select a synchronization source with a higher priority and higher signal quality, to improve synchronization precision. In addition, if a priority of a sidelink synchronization signal received by the first terminal device is the same as a priority of a sidelink synchronization signal sent by the first terminal device, the first terminal device may alternatively select a sidelink synchronization signal that includes an SLSS sequence with a smaller identity to perform synchronization. A smaller identity of the SLSS sequence may also indicate that a priority of the sidelink synchronization signal including the SLSS sequence is higher.

According to a sixth aspect, a communication apparatus is provided. The communication apparatus may be the first terminal device according to any one of the first aspect to the fifth aspect. The communication apparatus has functions of the first terminal device. The communication apparatus is, for example, the first terminal device, a large device including the first terminal device, or a functional module, for example, a baseband apparatus or a chip system, in the first terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the receiving unit) is configured to receive a first sidelink synchronization signal from a second terminal device in M frequency domain units, where the M frequency domain units are a part of all frequency domain units supported by the first terminal device, and M is a positive integer; the processing unit is configured to: when a first condition is satisfied, select the second terminal device as a synchronization source; and the transceiver unit (or the sending unit) is configured to send a second sidelink synchronization signal based on the first sidelink synchronization signal.

In an optional implementation, the processing unit is configured to determine that a fourth condition is satisfied; the processing unit is further configured to select a local clock of the first terminal device as a synchronization source; and the transceiver unit (or the sending unit) is configured to send a thirteenth sidelink synchronization signal, where an identity of an SLSS sequence included in the thirteenth sidelink synchronization signal is included in a first identity set, and the first identity set is an identity set corresponding to a priority group corresponding to an operating bandwidth of the first terminal device.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the functions of the first terminal device in any one of the first aspect to the fifth aspect.

According to a seventh aspect, a communication apparatus is provided. The communication apparatus may be the second terminal device according to any one of the first aspect to the fifth aspect. The communication apparatus has functions of the second terminal device. The communication apparatus is, for example, the second terminal device, a large device including the second terminal device, or a functional module, for example, a baseband apparatus or a chip system, in the second terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions in the third aspect.

In an optional implementation, the transceiver unit (or the sending unit) is configured to send a second sidelink synchronization signal; the transceiver unit (or the receiving unit) is configured to receive a seventh sidelink synchronization signal in all frequency domain units supported by the second terminal device, where a priority of a priority group corresponding to the seventh sidelink synchronization signal is higher than or equal to a priority of a priority group corresponding to the second sidelink synchronization signal, and a received power obtained by the second terminal device by measuring a transmit end of the seventh sidelink synchronization signal is greater than a seventh threshold; and the transceiver unit (or the sending unit) is configured to stop sending the second sidelink synchronization signal.

In an optional implementation, the transceiver unit (or the receiving unit) is configured to receive a tenth sidelink synchronization signal and an eleventh sidelink synchronization signal; and the transceiver unit (or the sending unit) is configured to: if a difference between a synchronization time domain position indicated by the tenth sidelink synchronization signal and a synchronization time domain position indicated by the eleventh sidelink synchronization signal is greater than a tenth threshold, and a priority of a priority group corresponding to the tenth sidelink synchronization signal is higher than or equal to a priority of a transmit end of the eleventh sidelink synchronization signal, send a twelfth sidelink synchronization signal in all or a part of frequency domain units supported by the second terminal device.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the functions of the second terminal device in any one of the first aspect to the fifth aspect.

According to an eighth aspect, a communication apparatus is provided. The communication apparatus may be the third terminal device according to any one of the first aspect to the fifth aspect. The communication apparatus has functions of the third terminal device. The communication apparatus is, for example, the third terminal device, a large device including the third terminal device, or a functional module, for example, a baseband apparatus or a chip system, in the third terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions in the third aspect.

In an optional implementation, the transceiver unit (or the receiving unit) is configured to receive an eighth sidelink synchronization signal and a first sidelink synchronization signal, where a priority of a priority group corresponding to the eighth sidelink synchronization signal is higher than a priority of a priority group corresponding to the first sidelink synchronization signal, and a received power obtained by a second terminal device by measuring a transmit end of the eighth sidelink synchronization signal is greater than an eighth threshold; the processing unit is configured to select the transmit end of the eighth sidelink synchronization signal as a synchronization source; and the transceiver unit (or the sending unit) is configured to send a ninth sidelink synchronization signal based on the eighth sidelink synchronization signal.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the functions of the third terminal device in any one of the first aspect to the fifth aspect.

According to a ninth aspect, a communication apparatus is provided. The communication apparatus may be a first terminal device, or may be a chip or a chip system used in the first terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first terminal device in the foregoing aspects.

According to a tenth aspect, a communication apparatus is provided. The communication apparatus may be a second terminal device, or may be a chip or a chip system used in the second terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the second terminal device in the foregoing aspects.

According to an eleventh aspect, a communication apparatus is provided. The communication apparatus may be a third terminal device, or may be a chip or a chip system used in the third terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the third terminal device in the foregoing aspects.

According to a twelfth aspect, a communication system is provided, including any one or more terminal devices of a first terminal device, a second terminal device, or a third terminal device, where the first terminal device is configured to perform the method performed by the first terminal device in the foregoing aspects, the second terminal device is configured to perform the method performed by the second terminal device in the foregoing aspects, and the third terminal device is configured to perform the method performed by the third terminal device in the foregoing aspects. For example, the first terminal device may be implemented by using the communication apparatus according to the sixth aspect or the ninth aspect, the second terminal device may be implemented by using the communication apparatus according to the seventh aspect or the tenth aspect, and the second terminal device may be implemented by using the communication apparatus according to the eighth aspect or the eleventh aspect.

According to a thirteenth aspect, a computer-readable storage medium is provided. The computer-readable storage medium is configured to store a computer program or instructions. When the computer program or the instructions are run, the method performed by the first terminal device, the second terminal device, or the third terminal device in the foregoing aspects is implemented.

According to a fourteenth aspect, a computer program product including instructions is provided. When the computer program product runs on a computer, the methods according to the foregoing aspects are implemented.

According to a fifteenth aspect, a chip system is provided, including a processor and an interface. The processor is configured to: invoke instructions from the interface, and run the instructions, to enable the chip system to implement the methods according to the foregoing aspects.

BRIEF DESCRIPTION OF DRAWINGS

FIG. 1 is a diagram of a quantity of channels occupied by a sensing UE;

FIG. 2 is a diagram in which a UE operating on a plurality of channels cannot keep synchronized with a UE on each of the plurality of channels;

FIG. 3 is a diagram of a communication network architecture to which an embodiment of this application is applicable;

FIG. 4 is a flowchart of a communication method according to an embodiment of this application;

FIG. 5 is a diagram of a set of SL synchronization resources in a synchronization period according to an embodiment of this application;

FIG. 6A and FIG. 6B are diagrams of two manners of obtaining identity sub-groups through division according to an embodiment of this application;

FIG. 7A to FIG. 7C are diagrams of some synchronization processes according to an embodiment of this application;

FIG. 8 is a diagram of a synchronization process according to an embodiment of this application;

FIG. 9 and FIG. 10 are flowcharts of two communication methods according to embodiments of this application;

FIG. 11 is a diagram of a synchronization process according to an embodiment of this application;

FIG. 12 and FIG. 13 are flowcharts of two communication methods according to embodiments of this application;

FIG. 14 is a diagram of an apparatus according to an embodiment of this application; and

FIG. 15 is a diagram of another apparatus according to an embodiment of this application.

## DESCRIPTION OF EMBODIMENTS

To make objectives, technical solutions, and advantages of embodiments of this application clearer, the following further describes embodiments of this application in detail with reference to accompanying drawings.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one item (piece) of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, an order, a time order, priorities, importance, or the like of the plurality of objects. For example, a first SL synchronization signal and a second SL synchronization signal may be a same SL synchronization signal, or may be different SL synchronization signals. In addition, this name does not indicate that occupied resources, a sending order, transmit ends/receive ends, content, sizes, application scenarios, priorities, or importance degrees of the two SL synchronization signals are different. In addition, step numbers in embodiments described in this application are merely intended to distinguish between different steps, but are not intended to limit an order of the steps. For example, S401 may be performed before S402, or may be performed after S402, or may be simultaneously performed with S402.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, including but not limited to the following scenarios: a sensing scenario, cellular communication, device-to-device (device-to-device, D2D) communication, vehicle to everything (vehicle to everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, smart office, a smart wearable, smart transportation, a smart city (smart city), an uncrewed aerial vehicle, and a robot. The terminal device may sometimes be referred to as a UE, a terminal, an access station, a UE station, a remote station, a wireless communication device, a user apparatus, or the like.

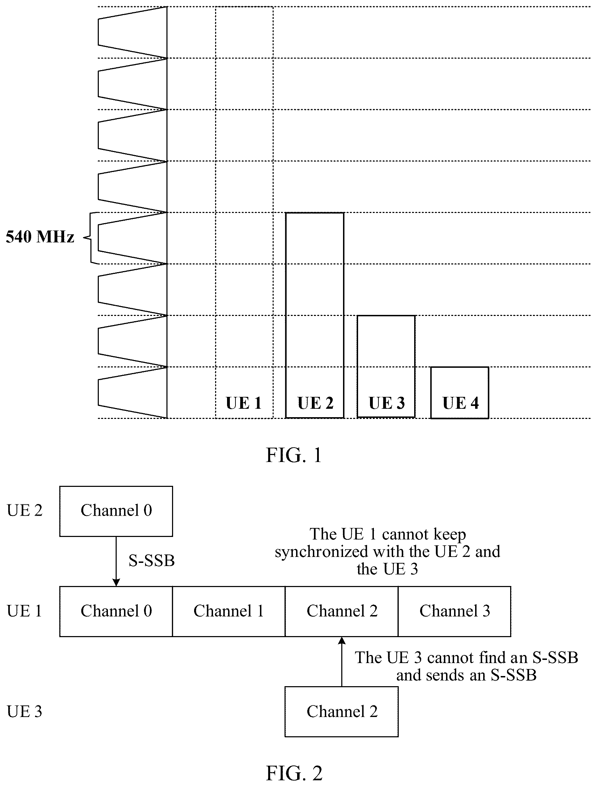

A terminal device that can implement a sensing function may be referred to as a sensing terminal device, and the sensing terminal device may sense a target in a self-sending and self-receiving mode. For example, the sensing terminal device may send a sensing reference signal, and may receive an echo signal reflected after the sensing reference signal reaches the target. The sensing terminal device may sense information such as a distance to the target and a speed relative to the target by comparing the sensing reference signal with the echo signal. A larger operating bandwidth of the sensing terminal device indicates a higher sensing resolution. Different sensing terminal devices may occupy different operating bandwidths or occupy different frequency domain units based on service requirements. In embodiments of this application, a frequency domain unit is, for example, a channel, a bandwidth part (bandwidth part, BWP), a resource pool (resource pool, RP), or a resource block (resource block, RB) set (set). An example in which the frequency domain unit is a channel is used. For example, a 45 GHz spectrum in China may be divided into eight channels at a granularity of 540 MHz. As shown in FIG. 1, for example, a UE 1 to a UE 4 are sensing terminal devices. A horizontal interval in FIG. 1 indicates one channel (whose bandwidth is 540 MHz). It can be learned from FIG. 1 that different sensing terminal devices may occupy different quantities of channels, and a larger quantity of occupied channels indicates a larger operating bandwidth.

In embodiments of this application, the sensing device may be configured to implement a sensing function, where the sensing device may include a network device (which may be referred to as a sensing network device), a terminal device (which may be referred to as a sensing terminal device), or the like. In this specification, the sensing terminal device is mainly used as an example for description. The "sensing terminal device" in the following may alternatively be replaced with the "sensing network device." For example, a sensing terminal device is a radar. The sensing terminal device may not have a communication module. In this case, the sensing terminal device does not have a communication function. For example, the sensing terminal device does not have a module of functions such as channel encoding and decoding, modulation and demodulation, or the like. Alternatively, the sensing terminal device may have a simple communication module, but the sensing terminal device only has a weak communication function, and cannot implement a complex communication function, for example, cannot parse a PSBCH.

Alternatively, the sensing terminal device may have a communication module that is the same as or similar to that of a communication terminal device, and have a communication function that is the same as or similar to that of the communication terminal device. This type of sensing terminal device can implement a complex communication function, for example, can parse a PSBCH.

In embodiments of this application, a communication apparatus configured to implement a function of the terminal device may be a terminal device, or may be an apparatus, for example, a chip system, that can support the terminal device in implementing the function. The apparatus may be installed in the terminal device. In the technical solutions provided in embodiments of this application, the technical solutions provided in embodiments of this application are described by using an example in which the apparatus configured to implement the function of the terminal device is the terminal device. In addition, for ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a V2X technology may be a road side unit (road side unit, RSU). The following provides descriptions by using an example in which the access network device is a base station. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

In an existing sidelink (sidelink, SL) synchronization mechanism, three types of synchronization sources are supported: a global navigation satellite system (global navigation satellite system, GNSS), an access network device (for example, an eNB or a gNB), and a UE. The synchronization source is a device that can provide synchronization information (for example, provide synchronization information by sending a synchronization signal). For example, when a UE is located in coverage of an access network device, the UE may receive a synchronization signal from the access network device. In this case, a synchronization source of the UE is the access network device. Alternatively, when a UE can find a reliable GNSS signal, a GNSS may be used as a synchronization source. In addition, the existing SL synchronization mechanism further supports the UE in being used as the synchronization source, to provide synchronization information for a UE that cannot find an access network device or a GNSS signal. The UE that becomes the synchronization source may send an SL synchronization signal to provide synchronization information for another UE. The UE that becomes the synchronization source is also referred to as a synchronization reference UE (synchronization reference UE, SyncRef UE).

Currently, synchronization between UEs is implemented by using a sidelink synchronization signal block (sidelink synchronization signal block, S-SSB). For example, a SyncRef UE may send an S-SSB to enable another UE to be synchronized with the SyncRef UE. The S-SSB includes a sidelink primary synchronization signal (sidelink primary synchronization signal, S-PSS), a sidelink secondary synchronization signal (sidelink secondary synchronization signal, S-SSS), and a physical sidelink shared channel (physical sidelink broadcast channel, PSBCH). The S-PSS is an m sequence of a length of 127, and the S-SSS is a gold sequence of a length of 127. There are two candidate sequences of the S-PSS, that is, $N_{ID,2}^{SL} = \{0,1\}$, where $N_{ID,2}^{SL}$ indicates an index of a candidate sequence of the S-PSS. There are 336 candidate sequences of the S-SSS, that is, $N_{ID,1}^{SL} = \{0,1,...,335\}$, where $N_{ID,1}^{SL}$ indicates an index of a candidate sequence of the S-SSS. The S-PSS and the S-SSS are collectively referred to as a sidelink synchronization signal (sidelink synchronization signal, SLSS). The SLSS is identified by an SLSS identity (identity, ID). One SLSS corresponds to one SLSS ID. The SLSS may carry the SLSS ID of the SLSS. SLSS IDs may be used to distinguish between synchronization sources that send S-SSBs. In an existing protocol, 672 SLSS IDs are supported, that is, $N_{ID}^{SL} = N_{ID,1}^{SL} + 336 N_{ID,2}^{SL}$, where $N_{ID}^{SL}$ indicates an SLSS ID. A UE may implement time-frequency synchronization (or symbol synchronization) with a synchronization source by detecting an S-PSS or an S-SSS from the synchronization source. Then, the UE may implement frame synchronization with the synchronization source by parsing a direct frame number (direct frame number, DFN) and an intraframe slot index (slot index) that are carried in a PSBCH from the synchronization source. In this way, the UE is synchronized with the synchronization source.

However, in the existing synchronization mechanism, if one UE occupies a plurality of channels, there is a high possibility that the UE cannot keep synchronized with a UE on each channel. As shown in FIG. 2, for example, a UE 1 to a UE 3 are all located outside coverage of an access network device and a GNSS, and cannot receive synchronization information from the access network device and the GNSS. The UE 1 operates on a channel 0 to a channel 3, the UE 2 operates on the channel 0, and the UE 3 operates on the channel 2. Assuming that the UE 2 first accesses a network, there is no other UE in the network at this moment, and the UE 2 does not find any S-SSB. In this case, the UE 2 selects the UE 2 as a synchronization source, and sends an S-SSB on the channel 0. Then, the UE 3 also accesses the network. Because the UE 2 and the UE 3 operate on different channels, the UE 3 cannot find the S-SSB sent by the UE 2. Therefore, the UE 3 also selects the UE 3 as a synchronization source, and sends an S-SSB on the channel 2. Finally, the UE 1 accesses the network, and the UE 1 separately detects the S-SSB on the channel 0 and the S-SSB on the channel 3. According to a stipulation in the existing protocol, the UE 1 selects, as a synchronization source, a SyncRef UE that is in the UE 2 and the UE 3 and whose corresponding sidelink reference signal received power (sidelink reference signal received power, S-RSRP) is higher. For example, the UE 1 selects the UE 2 as the synchronization source. In this case, the UE 1 and the UE 3 cannot be synchronized. It can be learned that the UE 1 operating on a plurality of channels can keep synchronized with a UE on only one of the channels, and cannot keep synchronized with a UE on each of the plurality of channels. Because the UE 1 cannot be synchronized with UEs on some channels, mutual interference may be caused between the UE 1 and these UEs.

In view of this, in embodiments of this application, if a first UE receives a first SL synchronization signal from a second UE in a part of frequency domain units, the first UE may send a second SL synchronization signal based on the first SL synchronization signal, so that after receiving the second SL synchronization signal, another UE in a frequency domain unit in which the first UE operates can be synchronized with the first UE. In addition, the first UE is synchronized with the second UE, so that all UEs on different channels can be synchronized with the second UE, to implement synchronization of UEs on a plurality of channels, and reduce interference between UEs.

The technical solutions provided in embodiments of this application may be applied to a 4th generation (4th generation, 4G) mobile communication technology system like a long term evolution (long term evolution, LTE) system, may be applied to a 5G system like a new radio (new radio, NR) system, or may be applied to a next generation mobile communication system or another similar communication system like a 6th generation (6th generation, 6G) mobile communication technology system. This is not specifically limited. In addition, the technical solutions provided in embodiments of this application may be applied to a D2D scenario, for example, an NR-D2D scenario, or may be applied to a V2X scenario, for example, an NR-V2X scenario. For example, the technical solutions provided in embodiments of this application may be used in fields such as whole-house intelligence, intelligent driving, assisted driving, or an intelligent connected vehicle.

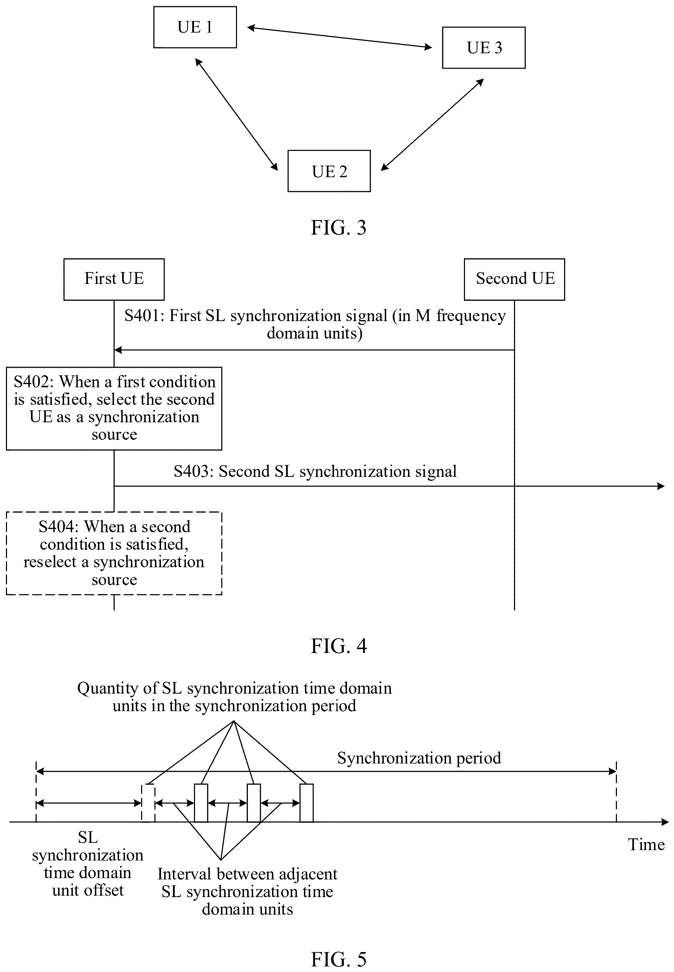

FIG. 3 shows a communication network architecture to which an embodiment of this application is applicable. FIG. 3 includes a UE 1, a UE 2, and a UE 3. A communication scenario in embodiments of this application may further include more or fewer UEs. In FIG. 3, only three UEs are used as an example. Any one of the UE 1 to the UE 3 may be a sensing UE or a communication UE, and types of the three UEs may be the same or different. The UE 1 to the UE 3 are, for example, all located outside coverage of an access network device and a GNSS. Communication can be performed between the three UEs, namely, the UE 1 to the UE 3 can communicate with each other. For example, transmission of an SL synchronization signal can be performed between the three UEs.

To better describe embodiments of this application, the following describes, with reference to the accompanying drawings, methods provided in embodiments of this application. In flowcharts corresponding to embodiments of this application, all steps represented by dashed lines are optional steps. Unless otherwise specified in the following, a UE (for example, the first UE, the second UE, and the third UE) described in embodiments of this application may be a sensing UE, or may be a communication UE. In embodiments of this application, a UE A selects the UE A as a synchronization source, the UE A selects a local clock of the UE A as the synchronization source, or the UE A selects the UE A as the synchronization source. The three descriptions express a same meaning. A receive end of an SL synchronization signal considers that a priority of the received SL synchronization signal is a priority of a transmit end of the SL synchronization signal. Therefore, in embodiments of this application, four descriptions: the priority of the SL synchronization signal, the priority of the transmit end of the SL synchronization signal, a priority of a priority group corresponding to the transmit end of the SL synchronization signal, and a priority of a priority group corresponding to the SL synchronization signal may be understood as expressing a same meaning. This meaning is different from a meaning expressed by "a priority of a priority group corresponding to an operating bandwidth of the transmit end of the SL synchronization signal". For example, a priority of a priority group corresponding to an SL synchronization signal sent by a transmit end may be the same as or different from a priority of a priority group corresponding to an operating bandwidth of the transmit end. In embodiments of this application, the SL synchronization signal is, for example, an S-SSB, or may be another signal used for synchronization.

An embodiment of this application provides a first communication method. FIG. 4 is a flowchart of the method. The method provided in this embodiment of this application may be applied to the network architecture shown in FIG. 3. For example, a first UE in this embodiment of this application may be the UE 1, the UE 2, or the UE 3 in FIG. 3, and a second UE in this embodiment of this application may be a UE other than the first UE in FIG. 3.

S401: The second UE sends a first SL synchronization signal in M frequency domain units. Correspondingly, the first UE receives the first SL synchronization signal from the second UE in the M frequency domain units. The second UE may send the first SL synchronization signal in a broadcast, multicast, or unicast manner.

For the second UE, the M frequency domain units are, for example, all or a part of frequency domain units supported by the second UE. For the first UE, the M frequency domain units are a part of frequency domain units supported by the first UE. That one UE supports one frequency domain unit may be understood as that the frequency domain unit is a frequency domain unit in which the UE operates, or that the frequency domain unit is configured for the UE.

Optionally, in S401, if the first UE is located outside coverage of an access network device and a GNSS, the first UE cannot receive an SL synchronization signal from the access network device and a GNSS signal from the GNSS. However, the first UE may receive an SL signal from another UE. Therefore, in S401, the first UE may receive one or more SL synchronization signals. The one or more SL synchronization signals are from one or more UEs, where one SL synchronization signal is from one UE. The first SL synchronization signal is, for example, one of the one or more SL synchronization signals.

S402: When a first condition is satisfied, the first UE selects the second UE as a synchronization source.

After receiving an SL synchronization signal from another UE, the first UE may select the synchronization source based on the received SL synchronization signal. The synchronization source selected by the first UE may be a transmit end of one of received SL synchronization signals. For example, the first UE selects a transmit end (namely, the second UE) of the first SL synchronization signal as the synchronization source. If the first UE receives only the first SL synchronization signal and receives no other SL synchronization signal, the first UE may select the second UE as the synchronization source. Alternatively, if the first UE receives a plurality of SL synchronization signals, the first UE may select the synchronization source based on the plurality of SL synchronization signals.

In an optional implementation of selecting the synchronization source by the first UE, the first UE may select the synchronization source based on a priority of a transmit end of an SL synchronization signal. For example, priority groups are obtained through grouping based on types of synchronization sources. Different types of synchronization sources correspond to different priority groups, and different priority groups correspond to different priorities. The first UE may select a synchronization source with a highest priority, to keep global synchronization as much as possible. There may be a plurality of orders of priorities of different types of synchronization sources. For example, when the GNSS is configured with the highest priority, priorities of synchronization sources in descending order are as follows: GNSS>SyncRef UE that directly obtains synchronization information from the GNSS>SyncRef UE that indirectly obtains synchronization information from the GNSS>access network device>SyncRef UE that directly obtains synchronization information from the access network device>SyncRef UE that indirectly obtains synchronization information from the access network device>another SyncRef UE>internal clock of a UE. For example, the first UE receives an SL synchronization signal 1 and an SL synchronization signal 2, where the SL synchronization signal 1 is from a UE A, and the SL synchronization signal 2 is from a UE B. The UE A is a SyncRef UE that directly obtains synchronization information from the GNSS, and the UE B is a SyncRef UE that indirectly obtains synchronization information from the access network device. In this case, the first UE may select the UE A as the synchronization source.

Alternatively, when the access network device is configured with the highest priority, priorities of synchronization sources in descending order are as follows: access network device>SyncRef UE that directly obtains synchronization information from the access network device>SyncRef UE that indirectly obtains synchronization information from the access network device>GNSS>SyncRef UE that directly obtains synchronization information from the GNSS>SyncRef UE that indirectly obtains synchronization information from the GNSS>another SyncRef UE>internal clock of a UE. For example, the first UE receives an SL synchronization signal 1 and an SL synchronization signal 2, where the SL synchronization signal 1 is from a UE A, and the SL synchronization signal 2 is from a UE B. The UE A is a SyncRef UE that directly obtains synchronization information from the GNSS, and the UE B is a SyncRef UE that indirectly obtains synchronization information from the access network device. In this case, the first UE may select the UE B as the synchronization source.

In the foregoing two priority orders, each item may also be considered as a priority group. For example, the GNSS may be considered as a priority group, the SyncRef UE that directly obtains the synchronization information from the GNSS may be considered as another priority group, and the SyncRef UE that indirectly obtains the synchronization information from the GNSS may be considered as still another priority group. "a>b" described above indicates that a has a higher priority than b.

For a UE, a synchronization source of the UE may include an initial synchronization source and a direct synchronization source (or referred to as a current synchronization source, or the like). An initial synchronization source of a UE is a reference source that provides synchronization information for the UE from a source. If a UE implements synchronization based on a synchronization signal received from a device, the device is considered as a direct synchronization source of the UE. For example, in S402, the first UE selects the second UE as a direct synchronization source. For example, the SyncRef UE that directly obtains the synchronization information from the GNSS means that the SyncRef UE directly receives a GNSS signal from the GNSS, or means that both an initial synchronization source and a direct synchronization source of the SyncRef UE are the GNSS. The SyncRef UE that indirectly obtains the synchronization information from the GNSS means that the UE receives an SL synchronization signal from another UE, and the another UE is synchronized with the GNSS. In other words, a direct synchronization source of the UE is the another UE, but an initial synchronization source of the UE is the GNSS. For the SyncRef UE that directly obtains the synchronization information from the access network device or the SyncRef UE that indirectly obtains the synchronization information from the access network device, understanding is similar. Details are not described again. Optionally, an SL synchronization signal sent by a UE may indicate an initial synchronization source of the UE. For example, the SL synchronization signal may include information indicating the initial synchronization source of the UE. Alternatively, an SL synchronization signal sent by a UE may not indicate an initial synchronization source of the UE, and the first UE may determine an initial synchronization source of a transmit end of an SL synchronization signal in another manner.

Optionally, the first condition may include one or more of the following: (1) A priority of a priority group corresponding to the first SL synchronization signal is higher than a priority corresponding to another SL synchronization signal received by the first UE. (2) A plurality of SL synchronization signals with a highest priority that are received by the first UE include the first SL synchronization signal, and the second UE is a device that is with a highest received power and that is determined by the first UE by measuring transmit ends of the plurality of SL synchronization signals. (3) A plurality of SL synchronization signals with a highest priority that are received by the first UE include the first SL synchronization signal, and the first SL synchronization signal is an SL synchronization signal that is in the plurality of SL synchronization signals and that indicates a smallest hop count.

If the first UE receives a plurality of SL synchronization signals, and the plurality of SL synchronization signals correspond to different priority groups, it indicates that priorities of the plurality of SL synchronization signals are different. In this case, the first UE may select, as the direct synchronization source, a transmit end of an SL synchronization signal that is in the plurality of SL synchronization signals and whose priority of a corresponding priority group is the highest. For example, the first UE selects the second UE as the direct synchronization source.

Alternatively, if the first UE receives a plurality of SL synchronization signals, and priorities of priority groups corresponding to at least two SL synchronization signals in the plurality of SL synchronization signals are the same and the highest, the first UE may select one of transmit ends of the at least two SL synchronization signals as the direct synchronization source. For example, the first UE may select the synchronization source based on received powers corresponding to the transmit ends of the at least two SL synchronization signals. For example, the first UE may select, as the synchronization source, a transmit end corresponding to a highest received power in the at least two transmit ends. A higher received power of the first UE for a device indicates that the first UE may be closer to the device or a channel condition between the first UE and the device is better, a signal-to-noise ratio may be higher when synchronization information is obtained, and the obtained synchronization information is more accurate.

In embodiments of this application, the received power may be represented by one or more of parameters such as an S-RSRP, sidelink reference signal receiving quality (sidelink reference signal receiving quality, S-RSRQ), or a sidelink signal to interference plus noise ratio (sidelink signal to interference plus noise ratio, S-SINR). A received power corresponding to a transmit end of an SL synchronization signal is determined by the first UE by measuring the transmit end of the SL synchronization signal, or is determined by the first UE by measuring a signal from the transmit end of the SL synchronization signal. One UE measures a signal from a device, for example, measures a demodulation reference signal (demodulation reference signal, DMRS) that is carried in a PSBCH and that is included in an SL synchronization signal from the device, or measures an S-PSS and/or an S-SSS included in the SL synchronization signal from the device.

Alternatively, if the first UE receives a plurality of SL synchronization signals, and priorities of priority groups corresponding to at least two SL synchronization signals in the plurality of SL synchronization signals are the same and the highest, the first UE may select the direct synchronization source based on hop counts indicated by the at least two SL synchronization signals. A hop count indicated by an SL synchronization signal may be a hop count between a transmit end of the SL synchronization signal and an initial synchronization source of the transmit end. For example, a hop count indicated by the first SL synchronization signal may be a hop count between the second UE and an initial synchronization source of the second UE. A hop count between one UE and an initial synchronization source of the UE may represent a quantity of synchronization signal sending processes that the UE undergoes until the UE receives a synchronization signal from the initial synchronization source. For example, if a hop count indicated by an SL synchronization signal is smaller, it indicates that a path for obtaining the synchronization signal by a transmit end of the SL synchronization signal is shorter, and synchronization precision is higher. Therefore, the first UE may select, as the direct synchronization source, the transmit end of the SL synchronization signal corresponding to the smaller hop count.

Alternatively, if the first UE receives a plurality of SL synchronization signals, priorities of priority groups corresponding to at least two SL synchronization signals in the plurality of SL synchronization signals are the same and the highest, and the at least two SL synchronization signals indicate a same hop count, the first UE may select the synchronization source based on received powers corresponding to transmit ends of the at least two SL synchronization signals. For example, the first UE may select, as the synchronization source, a transmit end corresponding to a highest received power in the at least two transmit ends.

It can be learned that the first UE may select the synchronization source with reference to a plurality of factors. This manner is flexible, and helps the first UE select a more appropriate synchronization source.

Optionally, different priority groups may be obtained through grouping based on types of synchronization sources. For this, refer to the descriptions of S402. Alternatively, different priority groups may be obtained through grouping based on operating bandwidths of synchronization sources.

For example, it is considered that if an operating bandwidth of a SyncRef UE is larger (for example, a quantity of occupied frequency domain units is larger), there is a high probability that an SL synchronization signal sent by the SyncRef UE can be found by more UEs, that is, a synchronization range of the SyncRef UE is larger. Therefore, it may be considered that a UE chooses as much as possible to perform synchronization based on SL synchronization signals sent on more frequency domain units. Therefore, existing SyncRef UEs may be grouped into N priority groups based on operating bandwidths, where N is an integer greater than or equal to 2. An example in which the frequency domain unit is a channel is used. For example, if there are eight channels in 45 GHz, a quantity of channels occupied by a UE may be 8, 7, 6, 5, 4, 3, 2, and 1, that is, there are eight levels of operating bandwidths in total. Each level of operating bandwidth corresponds to (or is associated with) one priority group. For example, an operating bandwidth 8 corresponds to a priority group 1, an operating bandwidth 7 corresponds to a priority group 2, and the rest may be deduced by analogy. Each priority group corresponds to one priority. Different priority groups correspond to different priorities. A priority of a priority group with a larger corresponding operating bandwidth is higher than that of a priority group with a smaller corresponding operating bandwidth. For example, if the priority group 1 corresponds to the operating bandwidth 8, and the priority group 2 corresponds to the operating bandwidth 7, a priority of the priority group 1 is higher than a priority of the priority group 2. One priority group corresponds to one type of SyncRef UE. A feature of this type of SyncRef UE is that an operating bandwidth of an initial synchronization source of this type of SyncRef UE is an operating bandwidth of the priority group. An initial synchronization source of one UE may be another device, for example, another SyncRef UE, an access network device, or a satellite device. Alternatively, an initial synchronization source of one UE may be the UE.

In a solution of obtaining priority groups through grouping based on operating bandwidths, different priority groups may alternatively correspond to (or are associated with) different identity sets, where any identity set may include at least one SLSS ID. In other words, SLSS IDs may alternatively be grouped into N sets, which are respectively indicated as $S_1, S_2, ..., and S_N$. For example, a priority group n corresponds to an identity set $S_n$, where $n = 1, 2, ..., and N$. It may be understood as that the priority group, the operating bandwidth, and the identity set are in one-to-one correspondence. For example, a priority group corresponding to an SL synchronization signal may be a priority group corresponding to an identity set to which an SLSS ID included in the SL synchronization signal belongs, and the priority group further corresponds to an operating bandwidth. For example, if an SLSS ID included in an SL synchronization signal belongs to an identity set 1, an operating bandwidth corresponding to the SL synchronization signal is eight channels, and a priority group corresponding to the SL synchronization signal is a priority group 1. Based on the foregoing example, an identity set with smaller n corresponds to a larger operating bandwidth and a higher priority. Optionally, an identity set with smaller n may include a smaller value of an SLSS ID. SLSS IDs included in different identity sets may not have an intersection set, and quantities of SLSS IDs included in different identity sets may be the same or different.

Optionally, in a scenario in which a UE is in coverage of a network, priority groups may be obtained through grouping based on types of synchronization sources, or may be obtained through grouping based on operating bandwidths. In a scenario in which a UE is outside coverage of a network, priority groups may be obtained through grouping based on types of synchronization sources, or may be obtained through grouping based on operating bandwidths. In addition, in the scenario in which the UE is in the coverage of the network and the scenario in which the UE is outside the coverage of the network, a same manner may be used to obtain priority groups through grouping. For example, the priority groups are all obtained through grouping based on types of synchronization sources, or are all obtained through grouping based on operating bandwidths. Alternatively, in the scenario in which the UE is in the coverage of the network and the scenario in which the UE is outside the coverage of the network, different manners may be used to obtain priority groups through grouping. For example, in the scenario in which the UE is in the coverage of the network, the priority groups are obtained through grouping based on types of synchronization sources, and in the scenario in which the UE is outside the coverage of the network, the priority groups are obtained through grouping based on operating bandwidths.

In addition, in a scenario in which a part of UEs are in the coverage of the network and the other part of UEs are outside the coverage of the network (for example, transmit ends of SL synchronization signals received by the first UE include both a UE in the coverage of the network and a UE outside the coverage of the network), priority groups may be obtained through grouping in a same manner. For example, the priority groups are all obtained through grouping based on types of synchronization sources in a uniform manner, or are all obtained through grouping based on operating bandwidths in a uniform manner. Alternatively, the two manners of obtaining priority groups through grouping may be combined. For example, the priority groups are first obtained through grouping based on types of synchronization sources. If there are a plurality of UEs belonging to a priority group "other SyncRef UEs", and priorities of the plurality of UEs need to be further determined (for example, a synchronization source needs to be selected from the plurality of UEs), the plurality of UEs may be further grouped into priority groups based on operating bandwidths.

It can be learned from the foregoing descriptions that a priority group corresponding to an SL synchronization signal is, for example, a priority group corresponding to a transmit end of the SL synchronization signal. If priority groups are obtained through grouping based on operating bandwidths, a priority group corresponding to an SL synchronization signal may also be understood as a priority group corresponding to an identity set to which an ID of an SLSS sequence included in the SL synchronization signal belongs.

Optionally, the priority of the priority group corresponding to the first SL synchronization signal may be higher than or equal to a priority of a priority group corresponding to an operating bandwidth of the first UE.

As described above, an SL synchronization signal may indicate a hop count. Optionally, the SL synchronization signal may indicate the hop count in different indication manners. The following provides examples for description.

1. In an optional implementation of indicating the hop count by the SL synchronization signal, the hop count is indicated by using a synchronization resource occupied by the SL synchronization signal, or the hop count indicated by the SL synchronization signal is represented by using the resource occupied by the SL synchronization signal.

A network device may configure an SL synchronization resource in a synchronization period for a UE, and duration of the synchronization period is, for example, 160 ms. The SL synchronization resource may be used by the UE to send or detect the SL synchronization signal. Alternatively, the SL synchronization resource may be predefined in a protocol, or may be preconfigured in the UE. The SL synchronization resource may include a time domain resource and/or a frequency domain resource, and the time domain resource included in the SL synchronization resource is, for example, SL time allocation (timeAllocation). Due to a limitation of a half-duplex mechanism of the UE, the UE needs to send and receive SL synchronization signals on different time domain resources. Therefore, at least two sets of SL synchronization resources may be configured for the UE in a synchronization period. Each set of SL synchronization resources may be defined by using the following three parameters: (1) SL synchronization time domain unit offset. In other words, a set of SL synchronization resources may include one or more synchronization resources (where one SL synchronization resource may be used to send one SL synchronization signal), and the SL synchronization time domain unit offset is a time domain unit offset of a $1^{st}$ SL synchronization time domain unit in a set of SL synchronization resources relative to a synchronization period boundary (for example, start time or end time of the synchronization period). (2) Time interval between adjacent SL synchronization time domain units, in other words, time domain unit between two adjacent SL synchronization time domain units in one or more SL synchronization time domain units included in a set of SL synchronization resources. (3) Quantity of SL synchronization time domain units included in a synchronization period. FIG. 5 is an example of a set of SL synchronization resources in a synchronization period. FIG. 5 shows the foregoing three parameters.

For example, T sets of SL synchronization resources (or "sets" may also be understood as "groups", in other words, T groups of SL synchronization resources) are preconfigured (or configured by a network device, predefined in a protocol, or the like) in a synchronization period, where each set of SL synchronization resources includes one or more SL synchronization time domain units, and each SL synchronization time domain unit may be used to send one SL synchronization signal. Duration of the synchronization period is, for example, 160 ms. Indexes may be set for the T sets of SL synchronization resources, for example, the indexes are 1 to T. For example, if one SL synchronization signal occupies one SL synchronization time domain unit in an $n^{th}$ set of SL synchronization resources in the T sets of SL synchronization resources, it indicates that a hop count indicated by the SL synchronization signal is n-1, where n is a positive integer less than or equal to T.

For example, the first UE sends a second SL synchronization signal based on the first SL synchronization signal sent by the second UE (this step is described below). This is equivalent to that the second UE is used as a direct synchronization source. The first SL synchronization signal and the second SL synchronization signal may occupy different sets of SL synchronization resources. Assuming that the first SL synchronization signal occupies an $(n-1)^{th}$ set of synchronization resources in the T sets of SL synchronization resources, the second SL synchronization signal may occupy the $n^{th}$ set of synchronization resources in the T sets of SL synchronization resources. This is equivalent to that an index of an SL synchronization resource occupied by the second SL synchronization signal may be an index of an SL synchronization resource occupied by the first SL synchronization signal plus 1.

Optionally, SL synchronization signals of a same source may use a same SLSS ID. For example, if the first SL synchronization signal and the second SL synchronization signal are SL synchronization signals of a same source, an ID of an SLSS sequence included in the second SL synchronization signal may be the same as an ID of an SLSS sequence included in the first SL synchronization signal.

2. In another optional implementation of indicating the hop count by the SL synchronization signal, the hop count is indicated by using an ID of an SLSS sequence included in the SL synchronization signal, or the hop count indicated by the SL synchronization signal is represented by using the ID of the SLSS sequence included in the SL synchronization signal.

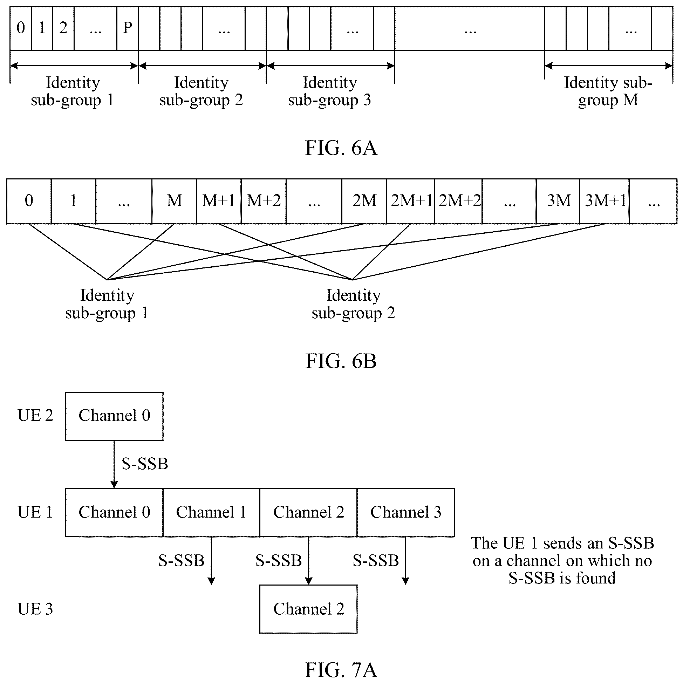

For example, each priority group described above corresponds to one identity set. For example, each identity set may be further divided into M identity sub-groups, where M may be an integer greater than or equal to 2. Each of the M identity sub-groups includes an SLSS ID, and quantities of SLSS IDs included in different identity sub-groups may be the same or different. For example, refer to FIG. 6A. A first manner of obtaining identity sub-groups through division is that an identity set corresponding to each priority group is divided into M identity sub-groups (an identity sub-group 1 to an identity sub-group M in FIG. 6A ) in a consecutive manner, where SLSS IDs of two adjacent identity sub-groups in the M identity sub-groups are consecutive. A difference between two adjacent SLSS IDs in a same identity sub-group is 1. FIG. 6A uses an example in which different identity sub-groups include a same quantity of SLSS IDs.

For another example, a second manner of obtaining identity sub-groups through division is that an identity set corresponding to each priority group is divided into M identity sub-groups in an interleaved manner, where an interval between two adjacent SLSS IDs in each identity sub-group is M, and SLSS IDs that indicate a same hop count and that are in different identity sub-groups are adjacent. In one identity sub-group, a hop count indicated by a $1^{st}$ SLSS ID is 0, and a hop count indicated by a $2^{nd}$ SLSS ID is 1, and a sequential increase is for the rest. For example, refer to FIG. 6B. An SLSS ID 0, an SLSS ID M, an SLSS ID 2M, ..., and the like belong to a same identity sub-group, for example, an identity sub-group 1; and an SLSS ID 1, an SLSS ID (1+M), an SLSS ID (1+2M), ..., and the like belong to another identity sub-group, for example, an identity sub-group 2. In other words, a difference between two adjacent SLSS IDs in a same identity sub-group is M. A hop count indicated by the SLSS ID 0 in the identity sub-group 1 is 0, a hop count indicated by the SLSS ID 1 in the identity sub-group 2 is 0, and the SLSS ID 0 and the SLSS ID 1 are adjacent, that is, SLSS IDs indicating a same hop count in different identity sub-groups are adjacent.

SL synchronization signals of a same source may use SLSS IDs in a same identity sub-group. For example, if the first SL synchronization signal and the second SL synchronization signal are SL synchronization signals of a same source, an ID of an SLSS sequence included in the second SL synchronization signal and an ID of an SLSS sequence included in the first SL synchronization signal belong to a same identity sub-group. For example, the ID of the SLSS sequence included in the second SL synchronization signal may be a sum of the ID of the SLSS sequence included in the first SL synchronization signal and a first step (step) value. If identity sub-groups are obtained through division in the foregoing first manner, the first step value is, for example, 1; or if identity sub-groups are obtained through division in the foregoing second manner, the first step value is, for example, M.

For example, the first UE may select an SL synchronization resource that is in a set different from that of the SL synchronization resource occupied by the first SL synchronization signal, to send the second SL synchronization signal (the step of sending the second SL synchronization signal is described below), so that a half-duplex operating mechanism of the UE is complied with. For example, if the first SL synchronization signal occupies an $n^{th}$ set of SL synchronization resources in T sets of SL synchronization resources, the second SL synchronization signal may occupy an SL synchronization resource other than the $n^{th}$ set of synchronization resources in the T sets of SL synchronization resources.

S403: The first UE sends the second SL synchronization signal based on the first SL synchronization signal from the second UE. Optionally, the second UE may receive the second SL synchronization signal, or the second UE may not receive the second SL synchronization signal.

In addition to selecting the second UE as the direct synchronization source, the first UE may further send an SL synchronization signal, for example, referred to as the second SL synchronization signal. This is equivalent to that, in this embodiment of this application, if a UE receives an SL synchronization signal in a part of frequency domain units supported by the UE, the UE may then send an SL synchronization signal based on the SL synchronization signal, so that more UEs can receive the SL synchronization signal from the UE, to implement synchronization of more UEs. The first UE may send the SL synchronization signal when any one or more of the following conditions are satisfied: (1) The first UE does not select another UE as a direct synchronization source (for example, the first UE receives no synchronization signal), but selects the first UE as a direct synchronization source (in this case, the first UE is also an initial synchronization source of the first UE). (2) The first UE has selected another UE as a direct synchronization source (or the first UE has received an SL synchronization signal from the another UE), but a received power obtained by the first UE by measuring the direct synchronization source is less than a threshold A. (3) The first UE has selected another UE as a direct synchronization source (or the first UE has received an SL synchronization signal from another UE), but the first UE receives an SL synchronization signal from the direct synchronization source only in a part of frequency domain units supported by the first UE. The $3^{rd}$ condition is mainly described in this embodiment of this application.

Optionally, the second SL synchronization signal may satisfy one or more of the following: (1) The identity of the SLSS sequence included in the second SL synchronization signal is determined based on the identity of the SLSS sequence included in the first SL synchronization signal. (2) The identity of the SLSS sequence included in the second SL synchronization signal belongs to an identity set associated with (or corresponding to) a priority group corresponding to the second SL synchronization signal, where a priority of the priority group corresponding to the second SL synchronization signal is higher than or equal to the priority of the priority group corresponding to the first SL synchronization signal. (3) Frame synchronization information indicated by the second SL synchronization signal is determined based on frame synchronization information indicated by the first SL synchronization signal. (4) A time domain position occupied by the second SL synchronization signal is different from a time domain position occupied by the first SL synchronization signal.

For example, if priority groups are not obtained through grouping based on operating bandwidths of UEs, the ID of the SLSS included in the second SL synchronization signal may be determined based on the ID of the SLSS sequence included in the first SL synchronization signal. For example, the ID of the SLSS sequence included in the second SL synchronization signal may be the same as the ID of the SLSS sequence included in the first SL synchronization signal; or the ID of the SLSS sequence included in the second SL synchronization signal may be a sum of the ID of the SLSS sequence included in the first SL synchronization signal and a second step value. The second step value may be predefined in a protocol, configured by a network device, preconfigured in a UE, or configured by a higher layer of the UE.

If priority groups are obtained through grouping based on operating bandwidths of UEs, the ID of the SLSS sequence included in the second SL synchronization signal may belong to an identity set corresponding to the priority group corresponding to the second SL synchronization signal. The priority group corresponding to the second SL synchronization signal may be the priority group corresponding to the first SL synchronization signal, or the priority group corresponding to the operating bandwidth of the first UE.

Optionally, the first UE may determine, based on the priority of the priority group corresponding to the first SL synchronization signal and the priority of the priority group corresponding to the operating bandwidth of the first UE, the priority group corresponding to the second SL synchronization signal, or determine an identity set from which the ID of the SLSS sequence included in the second SL synchronization signal is selected. For example, if the priority of the priority group corresponding to the first SL synchronization signal is higher than the priority of the priority group corresponding to the operating bandwidth of the first UE, or if an operating bandwidth corresponding to the first SL synchronization signal is greater than the operating bandwidth of the first UE, the priority group corresponding to the second SL synchronization signal may be the priority group corresponding to the first SL synchronization signal. For descriptions of content such as the priority group or the operating bandwidth corresponding to the SL synchronization signal, refer to the foregoing descriptions. In this case, the ID of the SLSS sequence included in the second SL synchronization signal may be selected from an identity set corresponding to the priority group corresponding to the first SL synchronization signal. The ID of the SLSS sequence included in the first SL synchronization signal also belongs to the identity set. For example, the ID of the SLSS sequence included in the first SL synchronization signal is used as the ID of the SLSS sequence included in the second SL synchronization signal; or the ID of the SLSS sequence included in the second SL synchronization signal may be set to be equal to a sum of the ID of the SLSS sequence included in the first SL synchronization signal and a third step value. The third step value may be predefined in a protocol, configured by a network device, preconfigured in a UE, or configured by a higher layer of the UE. Any two or more of the first step value, the second step value, and the third step value may be the same or different. The first UE may determine an identity set to which the ID of the SLSS sequence included in the second SL synchronization signal belongs, and a priority group corresponding to the identity set may be used as the priority group corresponding to the second SL synchronization signal.

For another example, if the priority of the priority group corresponding to the first SL synchronization signal is lower than or equal to the priority of the priority group corresponding to the operating bandwidth of the first UE, or if the operating bandwidth corresponding to the first SL synchronization signal is less than or equal to the operating bandwidth of the first UE, the priority group corresponding to the second SL synchronization signal may be the priority group corresponding to the operating bandwidth of the first UE. For example, the first UE may select any SLSS ID from an identity set corresponding to the priority group corresponding to the operating bandwidth of the first UE as the ID of the SLSS sequence included in the second SL synchronization signal.

The frame synchronization information indicated by the second SL synchronization signal may be determined based on the frame synchronization information indicated by the first SL synchronization signal. The frame synchronization information includes, for example, information such as a DFN and a slot (slot) index (index).

Considering a half-duplex limitation, the time domain position occupied by the second SL synchronization signal is different from the time domain position occupied by the first SL synchronization signal. It may be understood as that the SL synchronization resource occupied by the second SL synchronization signal and the SL synchronization resource occupied by the first SL synchronization signal do not belong to a same set of synchronization resources. Alternatively, it is understood as that an SL synchronization resource in which the second SL synchronization signal is located and an SL synchronization resource in which the first SL synchronization signal is located belong to different groups of SL synchronization resources.

Optionally, in a manner in which the first UE sends the second SL synchronization signal, the first UE may send the second SL synchronization signal in N frequency domain units. The N frequency domain units are a part of or all remaining frequency domain units other than the M frequency domain units in all the frequency domain units supported by the first UE. N is a positive integer. This manner may also be understood as follows: If the first UE receives an SL synchronization signal in a part of frequency domain units supported by the first UE, the first UE may send an SL synchronization signal on remaining frequency domain units supported by the first UE. Because transmission of the first SL synchronization signal is performed only in the M frequency domain units, a UE in a frequency domain unit other than the M frequency domain units cannot receive the first SL synchronization signal, and cannot implement synchronization. Therefore, the first UE may send the second SL synchronization signal in the N frequency domain units, so that a UE in the N frequency domain units can receive the second SL synchronization signal, to be synchronized with the first UE. In addition, the first UE is synchronized with the second UE, so that synchronization of UEs in more frequency domain units is implemented.

Alternatively, in another manner in which the first UE sends the second SL synchronization signal, the first UE may send the second SL synchronization signal in all the frequency domain units supported by the first UE. This manner may also be understood as follows: If the first UE receives an SL synchronization signal in a part of frequency domain units supported by the first UE, the first UE may send an SL synchronization signal in all the frequency domain units supported by the first UE. In this manner, the first UE sends the second SL synchronization signal in more frequency domain units, so that more UEs can be synchronized with the first UE. In addition, the first UE is synchronized with the second UE, so that synchronization of UEs in more frequency domain units is implemented.

An example in which the frequency domain unit is a channel, priority groups are not obtained through grouping based on operating bandwidths, the first UE sends an SL synchronization signal on remaining frequency domain units (for example, the N frequency domain units) supported by the first UE, and the SL synchronization signal is an S-SSB is used. FIG. 7A is a diagram of a synchronization process. After accessing a network first, a UE 2 and a UE 3 do not find any S-SSB, the UE 2 selects the UE 2 as a direct synchronization source, the UE 3 selects the UE 3 as a direct synchronization source (in this case, the UE 2 and the UE 3 are also initial synchronization sources), and the UE 2 and the UE 3 send S-SSBs. A UE 1 (for example, the first UE) then accesses the network, finds an S-SSB from the UE 2 on a channel 0, and finds an S-SSB from the UE 3 on a channel 2. For example, if the UE 2 and the UE 3 have a same priority, the UE 1 is preferentially synchronized with a UE with a higher S-RSRP, for example, the UE 2. Because the UE 1 finds only the S-SSB from the UE 2 on the channel 2, according to this embodiment of this application, the UE 1 sends S-SSBs on the channel 1 to a channel 3. Therefore, the UE 3 finds an S-SSB from the UE 1 on the channel 2, and it can be learned based on the foregoing priority order that a priority of the UE 1 is higher than a priority of the UE 3 (for example, if priority groups are obtained through grouping based on types of synchronization sources, the UE 1 uses another UE (the UE 2) as a synchronization source, and the UE 3 uses an internal clock of the UE 3 as a synchronization source, the priority of the UE 1 is higher than the priority of the UE 3; and for another example, if priority groups are obtained through grouping based on operating bandwidths of UEs, because an operating bandwidth of the UE 1 is greater than an operating bandwidth of the UE 3, the priority of the UE 1 is also higher than the priority of the UE 3). In this case, the UE 3 reselects the UE 1 as a direct synchronization source, and the UE 3 may stop sending the S-SSB. In this way, the UE 1, the UE 2, and the UE 3 can all be synchronized. It can be learned that, according to the solution in this embodiment of this application, UEs on all channels can be synchronized.

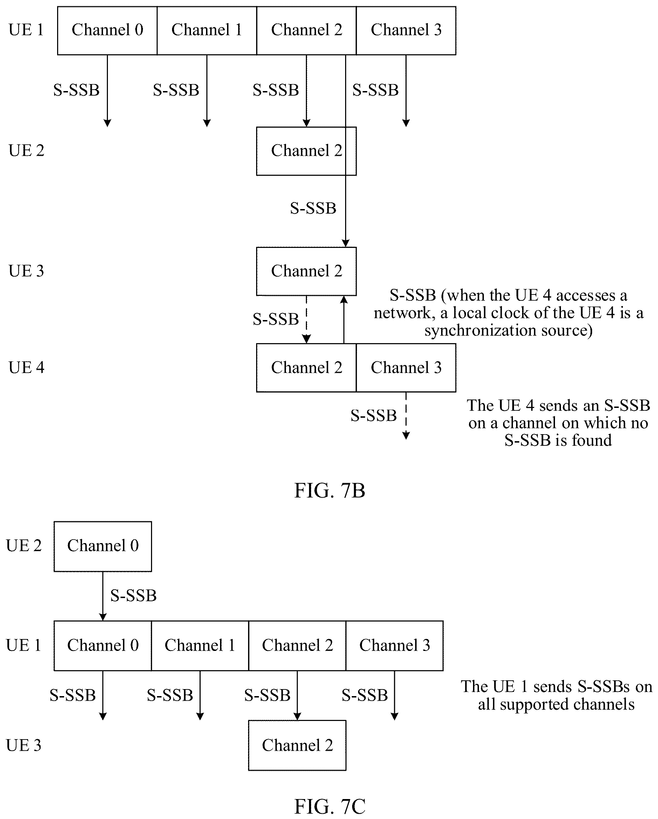

An example in which the frequency domain unit is a channel, priority groups are obtained through grouping based on operating bandwidths, the first UE sends an SL synchronization signal on remaining frequency domain units (for example, the N frequency domain units) supported by the first UE, and the SL synchronization signal is an S-SSB is used. FIG. 7B is a diagram of another synchronization process. A UE 1 operating on a channel 0 to a channel 3 and a UE 4 operating on the channel 2 and the channel 3 first access a network.

Because a distance between the UE 1 and the UE 4 is long, and the UE 1 and the UE 4 exceed coverage of each other, the UE 1 selects the UE 1 as a direct synchronization source, the UE 4 selects the UE 4 as a direct synchronization source (in this case, the UE 1 and the UE 4 are also initial synchronization sources), both the UE 1 and the UE 4 send S-SSBs, and both the UE 1 and the UE 4 become SyncRef UEs. A UE 2 and a UE 3 operating on the channel 2 then access the network. If, according to a stipulation of an existing protocol, for the UE 2 and the UE 3, the UE 1 and the UE 4 are both existing SyncRef UEs, that is, belong to a same priority group 1, both the UE 2 and the UE 3 further select, for synchronization, a SyncRef UE corresponding to a higher S-RSRP. Assuming that the UE 2 is closer to the UE 1, and the UE 3 is closer to the UE 4, the UE 2 selects the UE 1 as a direct synchronization source, and the UE 3 selects the UE 4 as a direct synchronization source. In this case, the UE 2 and the UE 3 cannot be synchronized, that is, global synchronization cannot be implemented between UEs.

However, based on priority groups obtained through grouping in this embodiment of this application, a priority of a priority group corresponding to an operating bandwidth of the UE 1 is higher than a priority of a priority group corresponding to an operating bandwidth of the UE 4. Therefore, both the UE 2 and the UE 3 are synchronized with the UE 1, so that synchronization of more UEs is implemented. Further, when an S-RSRP measured by the UE 3 for the UE 1 is lower than the threshold A, the UE 3 sends an S-SSB based on an S-SSB from the UE 1. In this case, the UE 4 is synchronized with the UE 3, in other words, the UE 4 is indirectly synchronized with the UE 1 (the UE 1 is an initial synchronization source of the UE 4). Therefore, global synchronization can be implemented between UEs. Although an operating bandwidth of the UE 3 is smaller than an operating bandwidth of the UE 4, the UE 3 sends the S-SSB based on the S-SSB from the UE 1. Therefore, a priority of a priority group corresponding to the S-SSB sent by the UE 3 is higher than a priority of a priority group corresponding to the operating bandwidth of the UE 4. In this way, the UE 4 is still synchronized with the UE 3. Because the UE 4 supports the channel 2 and the channel 3, and the UE 4 finds an S-SSB from the UE 3 only on the channel 2, the UE 4 may send an S-SSB on the channel 3. It can be learned that, according to the solution in this embodiment of this application, UEs on all channels can be synchronized. In addition, in this embodiment of this application, a UE can be further synchronized with a UE with a larger operating bandwidth as much as possible, to more facilitate global synchronization between UEs.

Optionally, after selecting a direct synchronization source, the first UE may further change (or reselect) a direct synchronization source. Therefore, the method may further include S404. When a second condition is satisfied, the first UE reselects a synchronization source, for example, reselects a direct synchronization source. If the second condition is not satisfied, the first UE may not need to reselect the synchronization source. For example, the first UE continues to send the second SL synchronization signal.

For example, the second condition may include one or more of the following: (1) A third SL synchronization signal is received, a priority of a priority group corresponding to the third SL synchronization signal is higher than the priority of the priority group corresponding to the first SL synchronization signal, and a received power obtained by the first UE by measuring a transmit end of the third SL synchronization signal is greater than a first threshold. (2) A third SL synchronization signal is received, a priority of a priority group corresponding to the third SL synchronization signal is the same as the priority of the priority group corresponding to the first SL synchronization signal, and a difference between a received power obtained by the first UE by measuring a transmit end of the third SL synchronization signal and a received power obtained by the first UE by measuring the second UE is greater than a second threshold. (3) A received power obtained by the first UE by measuring the second UE is less than a third threshold.

It may be understood as that, if the first UE receives an SL synchronization signal with a higher priority, and a received power is relatively high, the first UE may reselect the direct synchronization source, for example, select the transmit end of the third SL synchronization signal as the direct synchronization source. Alternatively, if the first UE receives an SL synchronization signal with a same priority, and a received power obtained by the first UE by measuring a transmit end of the SL synchronization signal is clearly greater than the received power obtained by the first UE by measuring the second UE, the first UE may reselect the direct synchronization source, for example, select the transmit end of the SL synchronization signal as the direct synchronization source. Alternatively, if the received power obtained by the first UE by measuring the second UE is relatively small, it indicates that signal quality of the second UE is relatively poor, and the first UE may reselect the direct synchronization source.

Optionally, in this embodiment of this application, after reselecting the synchronization source, the first UE may send a new SL synchronization signal based on the reselected synchronization source; or after reselecting the synchronization source, when a corresponding condition is satisfied, the first UE may stop sending an SL synchronization signal. For example, after the first UE reselects the direct synchronization source, if a received power obtained by the first UE by measuring a first synchronization source is greater than a fourth threshold, the first UE may stop sending an SL synchronization signal. The first synchronization source is the synchronization source reselected by the first UE. It may be understood as that, if a received power obtained by the first UE by measuring a signal from the first synchronization source is greater than the fourth threshold, it indicates that coverage of the first synchronization source is large enough, and another UE can implement synchronization based on an SL synchronization signal from the first synchronization source, and the first UE may not need to send an SL synchronization signal any more, to reduce power consumption of the first UE.

An example in which the frequency domain unit is a channel, priority groups are not obtained through grouping based on operating bandwidths, the first UE sends an SL synchronization signal in all the frequency domain units supported by the first UE, and the SL synchronization signal is an S-SSB is used. FIG. 7C is a diagram of a synchronization process. After accessing a network first, a UE 2 and a UE 3 do not find any S-SSB, the UE 2 selects the UE 2 as a direct synchronization source, the UE 3 selects the UE 3 as a direct synchronization source (in this case, the UE 2 and the UE 3 are also initial synchronization sources), and the UE 2 and the UE 3 send S-SSBs. A UE 1 (for example, the first UE) then accesses the network, finds an S-SSB from the UE 2 on a channel 0, and finds an S-SSB from the UE 3 on a channel 2. For example, if the UE 2 and the UE 3 have a same priority, the UE 1 is preferentially synchronized with a UE with a higher S-RSRP, for example, the UE 2. After the UE 1 is synchronized with the UE 2, the UE 1 sends S-SSBs on the channel 0 to a channel 3. After the UE 3 finds an S-SSB from the UE 1 on the channel 2, because a priority of the UE 1 is higher than a priority of the UE 3, the UE 3 reselects the UE 1 as a new direct synchronization source, and stops sending the S-SSB. Similarly, the UE 2 also finds an S-SSB from the UE 1 on the channel 0, and the UE 2 also selects the UE 1 as a new direct synchronization source, and stops sending the S-SSB. In this way, an S-RSRP measurement result of UE 1 for UE 2 may be lower than the threshold A, and the UE 1 reselects the UE 1 as a direct synchronization source (also an initial synchronization source). Finally, both the UE 2 and the UE 3 are synchronized with the UE 1 with a larger operating bandwidth, and the UE 2 and the UE 3 may no longer send S-SSBs, to reduce power consumption of the UE 2 and the UE 3. It can be learned that, according to the solution in this embodiment of this application, UEs on all channels can be synchronized. In addition, in this embodiment of this application, when a corresponding condition is satisfied, a UE can further stop sending an SL synchronization signal, to reduce power consumption of the UE.

Optionally, in another condition, the first UE may alternatively stop sending an SL synchronization signal, or reselect a synchronization source. For example, in addition to receiving the first SL synchronization signal, the first UE further receives a fourth SL synchronization signal, where the fourth SL synchronization signal is, for example, from a third UE. The first UE may simultaneously receive the first SL synchronization signal and the fourth SL synchronization signal, for example, receive the two SL synchronization signals in S401; or the first UE may separately receive the first SL synchronization signal and the fourth SL synchronization signal at different time. A received power obtained by the first UE by measuring the third UE is, for example, greater than an eighth threshold. In addition, a priority of a priority group corresponding to the fourth SL synchronization signal may be higher than the priority of the priority group corresponding to the second SL synchronization signal. In this case, the first UE may stop sending the second SL synchronization signal, and in addition, the first UE may reselect the third UE as a direct synchronization source. Optionally, the received power obtained by the first UE by measuring the transmit end (that is, the second UE) of the first SL synchronization signal may be less than a ninth threshold. For example, in a scenario, if a distance between the first UE and the third UE is relatively short, the received power obtained by the first UE by measuring the third UE is greater than the eighth threshold; and if a distance between the first UE and the second UE is relatively long, the received power obtained by the first UE by measuring the second UE is less than the ninth threshold.

The step of stopping sending the second SL synchronization signal by the first UE may be performed after the step of reselecting the third UE as the direct synchronization source; the two steps may be performed simultaneously; or the step of stopping sending the second SL synchronization signal by the first UE may be performed before the step of reselecting the third UE as the direct synchronization source.

The first UE may further send an SL synchronization signal, for example, referred to as a fifth SL synchronization signal, based on the fourth SL synchronization signal. This step may occur after the step in which the first UE stops sending the second SL synchronization signal or the first UE reselects the third UE as the direct synchronization source.

Optionally, the fifth SL synchronization signal may satisfy one or more of the following: (1) An identity of an SLSS sequence included in the fifth SL synchronization signal is determined based on an identity of an SLSS sequence included in the fourth SL synchronization signal. (2) An identity of an SLSS sequence included in the fifth SL synchronization signal belongs to an identity set associated with a priority group corresponding to the fourth SL synchronization signal, where a priority of a priority group corresponding to the fifth SL synchronization signal is higher than or equal to a priority of the priority group corresponding to the fourth SL synchronization signal. (3) Frame synchronization information indicated by the fifth SL synchronization signal is determined based on frame synchronization information indicated by the fourth SL synchronization signal. (4) A time domain position occupied by the fifth SL synchronization signal is different from a time domain position occupied by the fourth SL synchronization signal. For this part of content, refer to the foregoing related descriptions of the second SL synchronization signal.

In this embodiment of this application, if the first UE receives SL synchronization signals of different priorities, the first UE may send an SL synchronization signal based on an SL synchronization signal (for example, the fourth SL synchronization signal) with a higher priority, so that the sent SL synchronization signal has a higher priority. In this way, more UEs can be easily synchronized with a synchronization source with a higher priority in a uniform manner.

That the first UE may stop sending the second SL synchronization signal in some cases is described in the foregoing. In addition, the first UE may further stop sending the second SL synchronization signal in some other cases.

For example, after the first UE sends the second SL synchronization signal, if a sixth SL synchronization signal is received in all the frequency domain units supported by the first UE, a priority of a priority group corresponding to the sixth SL synchronization signal is higher than or equal to the priority of the priority group corresponding to the second SL synchronization signal, and a received power obtained by the first UE by measuring a transmit end (for example, a fourth UE) of the sixth SL synchronization signal is greater than a seventh threshold, the first UE may stop sending the second SL synchronization signal.

It may be understood as that, if the first UE receives an SL synchronization signal with a higher priority, and a received power obtained by the first UE by measuring a transmit end of the SL synchronization signal is greater than the seventh threshold, it indicates that coverage of the transmit end is large enough. In this case, another UE can implement synchronization based on the SL synchronization signal from the transmit end, and the first UE may not need to send an SL synchronization signal any more, to reduce power consumption of the first UE.

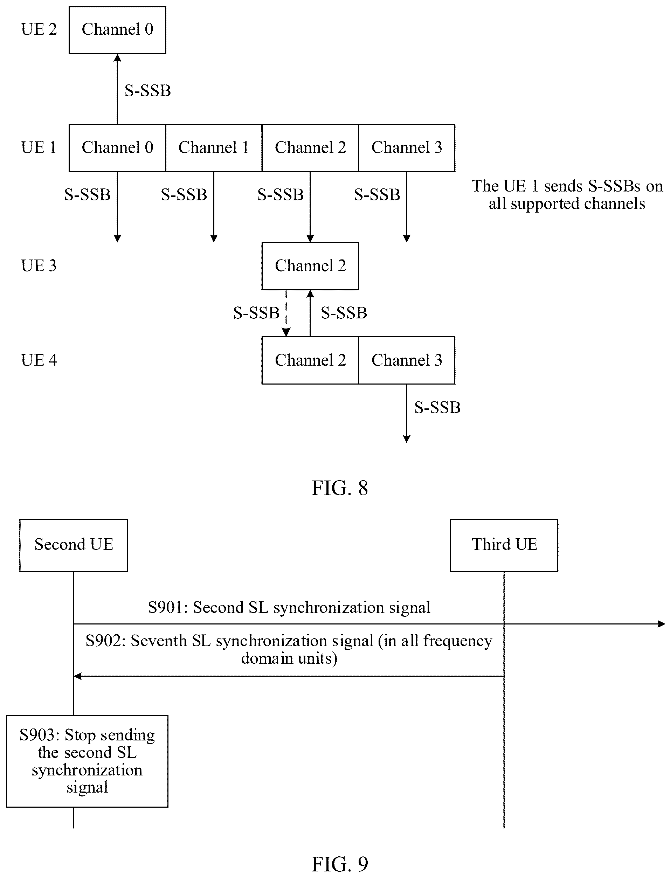

An example in which the frequency domain unit is a channel, priority groups are obtained through grouping based on operating bandwidths, and an SL synchronization signal is an S-SSB is used. FIG. 8 is a diagram of a synchronization process. A UE 1 operating on a channel 0 to a channel 3 and a UE 4 operating on the channel 2 and the channel 3 first access a network. Because a distance between the UE 1 and the UE 4 is long, and the UE 1 and the UE 4 exceed coverage of each other, the UE 1 selects the UE 1 as a direct synchronization source, the UE 4 selects the UE 4 as a direct synchronization source (in this case, the UE 1 and the UE 4 are also initial synchronization sources), both the UE 1 and the UE 4 send S-SSBs, and both the UE 1 and the UE 4 become SyncRef UEs. A UE 2 operating on the channel 0 and a UE 3 operating on the channel 2 then access the network. Based on the priority groups obtained through grouping in this embodiment of this application, a priority of a priority group corresponding to an operating bandwidth of the UE 1 is higher than a priority of a priority group corresponding to an operating bandwidth of the UE 4. Therefore, both the UE 2 and the UE 3 are synchronized with the UE 1, so that synchronization of more UEs is implemented. After being synchronized with the UE 1, when a forwarding condition is satisfied, the UE 3 may send an S-SSB. In this case, the S-SSB of the UE 3 may be determined based on an S-SSB from the UE 1. Therefore, a priority of a priority group corresponding to the S-SSB of the UE 3 may be higher than the priority of the priority group corresponding to the operating bandwidth of the UE 4. This is equivalent to that the UE 4 receives an S-SSB with a higher priority. In this case, the UE 4 may alternatively be indirectly synchronized with the UE 1. The UE 4 may send S-SSBs on the channel 2 and the channel 3 based on the S-SSB from the UE 3. In this case, the UE 3 can then receive an S-SSB from the UE 4 on the channel 2. If an S-RSRP measured by the UE 3 for the UE 4 is greater than the seventh threshold, the UE 3 may stop sending the S-SSB, to reduce power consumption of the UE 3.

In this embodiment of this application, if the first UE receives the first SL synchronization signal from the second UE in a part of frequency domain units, the first UE may send the second SL synchronization signal based on the first SL synchronization signal, so that after receiving the second SL synchronization signal, another UE in a frequency domain unit in which the first UE operates can be synchronized with the first UE. In addition, the first UE is synchronized with the second UE, so that all UEs on different channels can be synchronized with the second UE, to implement synchronization of UEs on a plurality of channels, and reduce interference between UEs.

An embodiment of this application provides a second communication method. FIG. 9 is a flowchart of the method. The method provided in this embodiment of this application may be applied to the network architecture shown in FIG. 3. For example, a second UE in this embodiment of this application may be the UE 1, the UE 2, or the UE 3 in FIG. 3. The second UE in this embodiment of this application and the first UE in the embodiment shown in FIG. 4 may be a same UE, or may be different UEs.

S901: The second UE sends a second SL synchronization signal. The second UE may send the second SL synchronization signal in a broadcast, multicast, or unicast manner.

Optionally, the second UE may send the second SL synchronization signal when any one or more of the following conditions are satisfied: (1) The second UE does not select another UE as a direct synchronization source (for example, the second UE receives no synchronization signal), but selects the second UE as the direct synchronization source (in this case, the second UE is also an initial synchronization source of the second UE). (2) The second UE has selected another UE as a direct synchronization source (or the second UE has received an SL synchronization signal from the another UE), but a received power obtained by the second UE by measuring the direct synchronization source is less than a threshold A. (3) The second UE has selected another UE as a direct synchronization source (or the second UE has received an SL synchronization signal from the another UE), but the second UE receives an SL synchronization signal from the direct synchronization source only in a part of frequency domain units supported by the second UE. For the 3rd condition, refer to the embodiment shown in FIG. 4.

For example, the second SL synchronization signal in this embodiment of this application and the second SL synchronization signal in the embodiment shown in FIG. 4 may be a same SL synchronization signal. In this case, for related content of the second SL synchronization signal, refer to the descriptions of the embodiment shown in FIG. 4. Alternatively, the second SL synchronization signal in this embodiment of this application and the second SL synchronization signal in the embodiment shown in FIG. 4 may be different SL synchronization signals. In this case, the second SL synchronization signal in this embodiment of this application may be sent in a manner different from that in the embodiment shown in FIG. 4.

S902: The second UE receives a seventh SL synchronization signal in all the frequency domain units supported by the second UE. The seventh SL synchronization signal is from a UE other than the second UE, for example, a third UE. The third UE may receive the second SL synchronization signal, or the third UE may not receive the second SL synchronization signal.

It can be learned from the embodiment shown in FIG. 4 that UEs may be grouped into different priority groups based on operating bandwidths of the UEs, or may not be grouped into priority groups based on operating bandwidths. Optionally, a priority of a priority group corresponding to the seventh SL synchronization signal may be higher than or equal to a priority of a priority group corresponding to the second SL synchronization signal. For descriptions of a priority group corresponding to one SL synchronization signal, refer to the embodiment shown in FIG. 4.

In addition, a received power obtained by the second UE by measuring a transmit end of the seventh SL synchronization signal may be greater than a seventh threshold.

S903: The second UE stops sending the second SL synchronization signal.

For more content of this embodiment of this application, refer to the descriptions of related content of stopping, after receiving the sixth SL synchronization signal, sending the SL synchronization signal by the first UE in the embodiment shown in FIG. 4.

It may be understood as that, if the first UE receives an SL synchronization signal with a higher priority, and a received power obtained by the first UE by measuring a transmit end of the SL synchronization signal is greater than the seventh threshold, it indicates that coverage of the transmit end is large enough. In this case, another UE can implement synchronization based on the SL synchronization signal from the transmit end, and the first UE may not need to send an SL synchronization signal any more, to reduce power consumption of the first UE.

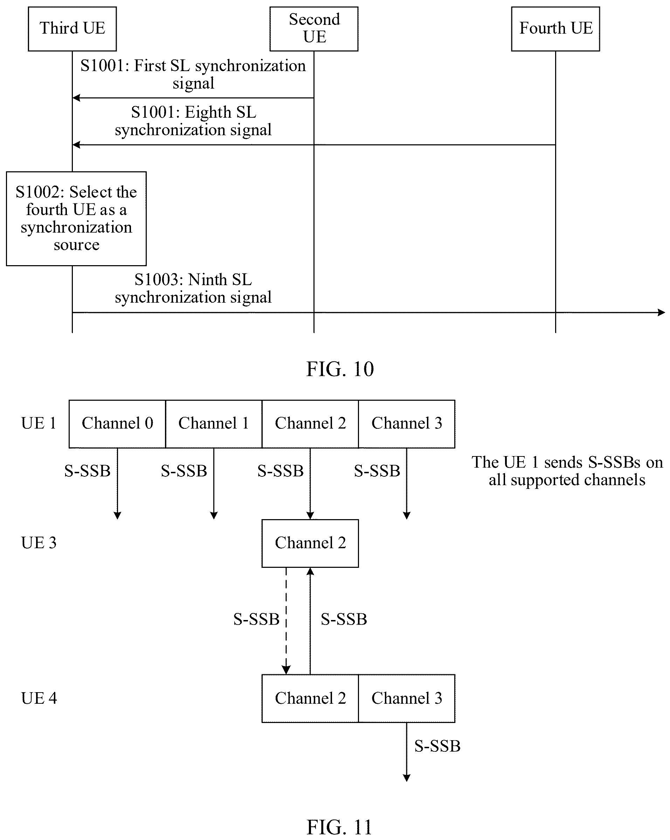

An embodiment of this application provides a third communication method. FIG. 10 is a flowchart of the method. The method provided in this embodiment of this application may be applied to the network architecture shown in FIG. 3. For example, a third UE in this embodiment of this application may be the UE 1, the UE 2, or the UE 3 in FIG. 3. The third UE in this embodiment of this application and the first UE in the embodiment shown in FIG. 4 may be a same UE or different UEs.

S1001: A fourth UE sends an eighth SL synchronization signal, and a second UE sends a first SL synchronization signal. Correspondingly, the third UE receives the eighth SL synchronization signal from the fourth UE, and receives the first SL synchronization signal from the second UE. The third UE may receive the first SL synchronization signal and the eighth SL synchronization signal simultaneously, or may receive the first SL synchronization signal and the eighth SL synchronization signal at different time. The first SL synchronization signal in this embodiment of this application and the first SL synchronization signal in the embodiment shown in FIG. 4 may be a same SL synchronization signal, or may be different SL synchronization signals.

A priority of a priority group corresponding to the eighth SL synchronization signal may be higher than a priority of a priority group corresponding to the first SL synchronization signal. For descriptions of concepts such as a priority group corresponding to an SL synchronization signal, refer to the embodiment shown in FIG. 4.

Optionally, a received power obtained by the third UE by measuring the fourth UE is greater than an eighth threshold, and a received power obtained by the third UE by measuring the second UE is less than a ninth threshold and is greater than 0. For example, in a scenario, if a distance between the third UE and the fourth UE is relatively short, the received power obtained by the third UE by measuring the fourth UE is greater than the eighth threshold; and if a distance between the third UE and the second UE is relatively long, the received power obtained by the third UE by measuring the second UE is less than the ninth threshold.

S1002: The third UE selects the fourth UE as a synchronization source. For example, the third UE selects the fourth UE as a direct synchronization source based on the eighth SL synchronization signal and the first SL synchronization signal.

S1003: The third UE sends a ninth SL synchronization signal based on the eighth SL synchronization signal. Optionally, the fourth UE can receive the ninth SL synchronization signal, or the fourth UE may not receive the ninth SL synchronization signal. The second UE can receive the ninth SL synchronization signal, or the second UE may not receive the ninth SL synchronization signal.

Optionally, the ninth SL synchronization signal may satisfy one or more of the following: (1) An identity of an SLSS sequence included in the ninth SL synchronization signal is determined based on an identity of an SLSS sequence included in the eighth SL synchronization signal. (2) An identity of an SLSS sequence included in the ninth SL synchronization signal belongs to an identity set associated with the priority group corresponding to the eighth SL synchronization signal, where a priority of a priority group corresponding to the ninth SL synchronization signal is higher than or equal to the priority of the priority group corresponding to the eighth SL synchronization signal. (3) Frame synchronization information indicated by the ninth SL synchronization signal is determined based on frame synchronization information indicated by the eighth SL synchronization signal. (4) A time domain position occupied by the ninth SL synchronization signal is different from a time domain position occupied by the eighth SL synchronization signal. For this part of content, refer to related descriptions of the second SL synchronization signal in the embodiment shown in FIG. 4.

FIG. 11 is used as an example. In a period of time T, a UE 3 may receive an S-SSB from a UE 1 and may also receive an S-SSB from a UE 4. A priority of a priority group corresponding to the S-SSB from the UE 1 is higher than a priority of a priority group corresponding to the S-SSB from the UE 4. Because the priority of the priority group corresponding to the S-SSB from the UE 1 is higher, the UE 3 selects the UE 1 as a direct synchronization source, and synchronizes with the UE 1. However, the UE 3 currently does not satisfy any forwarding condition described in the embodiment shown in FIG. 4. In addition, the UE 3 is close to the UE 1, and does not satisfy a condition that is specified in an existing protocol and that forwarding can be performed when lower than a threshold (for example, the threshold A described in the embodiment shown in FIG. 4). Therefore, this embodiment of this application is provided, so that the UE 3 can also send an S-SSB. In this case, the UE 4 can also be finally synchronized with the UE 1. In this way, global synchronization of UEs is implemented.

Optionally, when a corresponding condition is satisfied, the third UE may then send the ninth SL synchronization signal based on the eighth SL synchronization signal. If a corresponding condition is not satisfied, the third UE may not need to send the ninth SL synchronization signal based on the eighth SL synchronization signal, or may not need to send an SL synchronization signal. The condition is, for example, a condition A. The condition A may include one or more of the following: the received power obtained by the third UE by measuring the fourth UE is greater than the eighth threshold, the received power obtained by the third UE by measuring the second UE is less than the ninth threshold and greater than 0, or the third UE periodically receives the first SL synchronization signal in first duration.

FIG. 11 is still used as an example. For the UE 3, if the priority of the priority group corresponding to the S-SSB from the UE 1 is higher, the UE 3 selects the UE 1 as the direct synchronization source, and synchronizes with the UE 1. A UE 5 then appears in the first duration. For example, the UE 5 is synchronized with the UE 1. In addition, the UE 5 is relatively far away from the UE 1 and is relatively close to the UE 4. In this case, the UE 5 satisfies a condition that forwarding of the S-SSB is performed when lower than a threshold (for example, the threshold A), and the UE 5 may forward the S-SSB from the UE 1. Therefore, a priority of a priority group corresponding to an S-SSB sent by the UE 5 is the same as the priority of the priority group corresponding to the S-SSB sent by the UE 1. The U 4 can receive the S-SSB from the UE 5, so that the U 4 can be synchronized with the UE 5. This is equivalent to being indirectly synchronized with the UE 1. It can be learned that the UE 4 can also be synchronized with the UE 1 without sending the S-SSB by the UE 3. Therefore, in this case, the UE 3 may not need to send the S-SSB. Optionally, if the UE 1 always receives (for example, periodically receives) an S-SSB with a low priority from the UE 4 in the first duration, it indicates that a UE 5 that satisfies the foregoing condition may not exist. In this case, the UE 3 may send the S-SSB, so that the UE 4 is synchronized with the UE 3.

Optionally, the third UE may further stop sending the SL synchronization signal in some cases. For example, the third UE receives a fifteenth SL synchronization signal in all frequency domain units supported by the third UE, and if a priority of a priority group corresponding to the fifteenth SL synchronization signal is higher than or equal to the priority of the priority group corresponding to the ninth SL synchronization signal, and a received power obtained by the third UE by measuring a transmit end of the fifteenth SL synchronization signal is greater than a thirteenth threshold, the third UE may stop sending the ninth SL synchronization signal. For this part of content, refer to the descriptions of the embodiment shown in FIG. 9 or the embodiment shown in FIG. 4.

In addition, for more content of this embodiment of this application, refer to the descriptions of the content of sending the fifth SL synchronization signal by the first UE after receiving the fourth SL synchronization signal and the first SL synchronization signal in the embodiment shown in FIG. 4.

In this embodiment of this application, the third UE receives SL synchronization signals of different priorities. If a corresponding condition (for example, the condition A) is satisfied, the third UE may send an SL synchronization signal based on an SL synchronization signal with a higher priority, so that the sent SL synchronization signal has a higher priority. In this way, more UEs can be easily synchronized with a synchronization source with a higher priority.

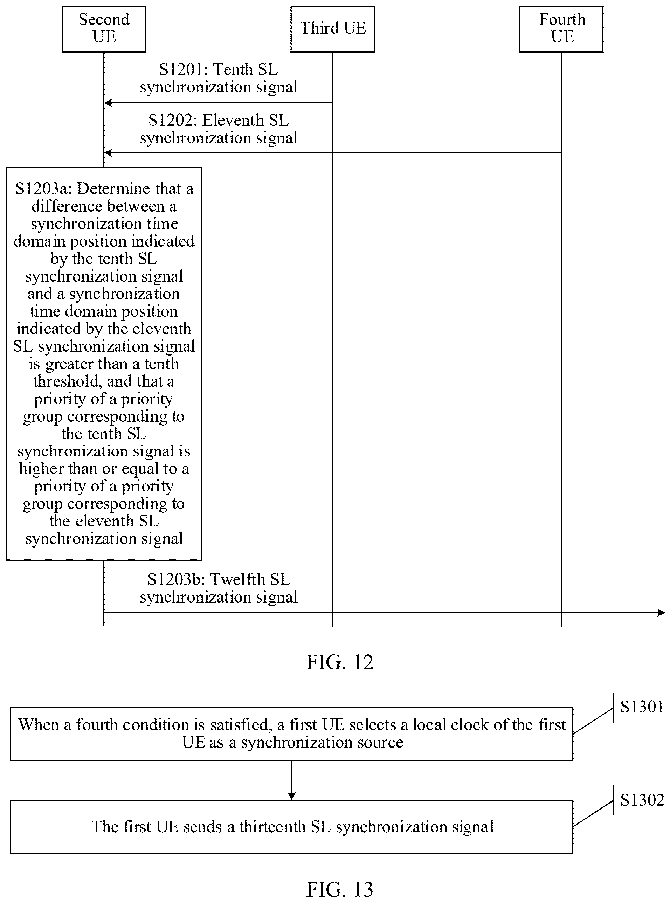

An embodiment of this application provides a fourth communication method. FIG. 12 is a flowchart of the method. The method provided in this embodiment of this application may be applied to the network architecture shown in FIG. 3. For example, a second UE in this embodiment of this application may be the UE 1, the UE 2, or the UE 3 in FIG. 3. The second UE in this embodiment of this application and the first UE in the embodiment shown in FIG. 4 may be a same UE or different UEs.

S1201: A third UE sends a tenth SL synchronization signal. Correspondingly, the second UE receives the tenth SL synchronization signal from the third UE.

S1202: A fourth UE sends an eleventh SL synchronization signal. Correspondingly, the second UE receives the eleventh SL synchronization signal from the fourth UE.

S1201 and S1202 may occur simultaneously, and the second UE may receive the tenth SL synchronization signal and the eleventh SL synchronization signal simultaneously. Alternatively, S1201 may occur before S1202, or S1201 may occur after S1202, and the second UE may receive the tenth SL synchronization signal and the eleventh SL synchronization signal at different time.

Optionally, the tenth SL synchronization signal and the eleventh SL synchronization signal may be SL synchronization signals of a same source. For example, an initial synchronization source associated with the tenth SL synchronization signal and an initial synchronization source associated with the eleventh SL synchronization signal are a same synchronization source.

S1203: If a difference between a synchronization time domain position indicated by the tenth SL synchronization signal and a synchronization time domain position indicated by the eleventh SL synchronization signal is greater than a tenth threshold, and a priority of a priority group corresponding to the tenth SL synchronization signal is higher than or equal to a priority of a priority group corresponding to the eleventh SL synchronization signal, the second UE may send a twelfth SL synchronization signal. Alternatively, S1203 may include two steps: S1203a and S1203b. S1203a includes: The second UE determines that the difference between the synchronization time domain position indicated by the tenth SL synchronization signal and the synchronization time domain position indicated by the eleventh SL synchronization signal is greater than the tenth threshold, and that the priority of the priority group corresponding to the tenth SL synchronization signal is higher than or equal to the priority of the priority group corresponding to the eleventh SL synchronization signal. S1203b includes: The second UE sends the twelfth SL synchronization signal. FIG. 12 uses an example in which S1203 includes S1203a and S1203b. In other words, FIG. 12 includes S1203a and S1203b, but does not include S1203.

The third UE can receive the twelfth SL synchronization signal, or the third UE may not receive the twelfth SL synchronization signal. The fourth UE can receive the twelfth SL synchronization signal, or the fourth UE may not receive the twelfth SL synchronization signal. For descriptions of content such as a priority group corresponding to an SL synchronization signal, refer to the embodiment shown in FIG. 4.

Optionally, S1203 may be replaced with: If the difference between the synchronization time domain position indicated by the tenth SL synchronization signal and the synchronization time domain position indicated by the eleventh SL synchronization signal is always greater than the tenth threshold in second duration, and the priority of the priority group corresponding to the tenth SL synchronization signal is higher than or equal to the priority of the priority group corresponding to the eleventh SL synchronization signal, the second UE may send the twelfth SL synchronization signal. For example, the second UE may receive the tenth SL synchronization signal at least once and the eleventh SL synchronization signal at least once in the second duration. In this case, the second UE may perform at least one determining process. Each determining process is determining the difference between the synchronization time domain position indicated by the tenth SL synchronization signal and the synchronization time domain position indicated by the eleventh SL synchronization signal, or determining whether the difference between the synchronization time domain position indicated by the tenth SL synchronization signal and the synchronization time domain position indicated by the eleventh SL synchronization signal is greater than the tenth threshold. If the difference between the synchronization time domain position indicated by the tenth SL synchronization signal received in the second duration and the synchronization time domain position indicated by the eleventh SL synchronization signal received in the second duration is always greater than the tenth threshold, the second UE may send the twelfth SL synchronization signal. If the difference is not always greater than the tenth threshold, the second UE may not send the twelfth SL synchronization signal. Adding a condition of the second duration can improve determining accuracy, reduce processes in which the second UE sends an SL synchronization signal, and reduce power consumption of the second UE.

Optionally, the second UE may send the twelfth SL synchronization signal in all or a part of frequency domain units supported by the second UE.

A synchronization time domain position indicated by an SL synchronization signal is, for example, a location that is of a slot and that is indicated by the SL synchronization signal or a location that is of an OFDM symbol and that is indicated by the SL synchronization signal. For example, a location that is of a first OFDM symbol and that is indicated by the tenth SL synchronization signal is a first moment, and a location that is of the first OFDM symbol and that is indicated by the eleventh SL synchronization signal is a second moment. A difference between the first moment and the second moment is greater than the tenth threshold, indicating that there is an error between SL synchronization signals, and UEs that perform synchronization based on the two SL synchronization signals cannot be synchronized. In this case, the second UE may send the twelfth SL synchronization signal, so that more UEs can be synchronized with the second UE instead of being separately synchronized with the third UE and the fourth UE, to implement synchronization of more UEs.

For example, if the priority of the priority group corresponding to the tenth SL synchronization signal is higher than the priority of the priority group corresponding to the eleventh SL synchronization signal, the twelfth SL synchronization signal may be determined based on the tenth SL synchronization signal. For another example, if the priority of the priority group corresponding to the tenth SL synchronization signal is equal to the priority of the priority group corresponding to the eleventh SL synchronization signal, the second UE may determine hop counts indicated by the tenth SL synchronization signal and the eleventh SL synchronization signal, and determine the twelfth SL synchronization signal based on an SL synchronization signal that indicates a smaller hop count. For example, if a hop count indicated by the tenth SL synchronization signal is smaller than a hop count indicated by the eleventh SL synchronization signal, the twelfth SL synchronization signal may be determined based on the tenth SL synchronization signal. A hop count indicated by an SL synchronization signal may be a hop count between a transmit end of the SL synchronization signal and an initial synchronization source associated with the SL synchronization signal. A smaller hop count indicated by the SL synchronization signal indicates a shorter path between the transmit end of the SL synchronization signal and the initial synchronization source associated with the SL synchronization signal. In this case, an error of a synchronization time domain position indicated by the SL synchronization signal is smaller. An SL synchronization signal is sent based on the SL synchronization signal with the smaller hop count, so that synchronization precision can be improved. For a manner of indicating the hop count by the SL synchronization signal, refer to the embodiment shown in FIG. 4. Alternatively, in this embodiment of this application, the SL synchronization signal may indicate the hop count in a manner other than the manner provided in the embodiment shown in FIG. 4. For example, the SL synchronization signal may carry information indicating the hop count.

Optionally, the twelfth SL synchronization signal may satisfy one or more of the following: (1) An identity of an SLSS sequence included in the twelfth SL synchronization signal is determined based on an identity of an SLSS sequence included in the tenth SL synchronization signal. (2) An identity of an SLSS sequence included in the twelfth SL synchronization signal belongs to an identity set associated with a priority group corresponding to the twelfth SL synchronization signal, where a priority of the priority group corresponding to the twelfth SL synchronization signal is higher than or equal to the priority of the priority group corresponding to the tenth SL synchronization signal. (3) Frame synchronization information indicated by the twelfth SL synchronization signal is determined based on frame synchronization information indicated by the tenth SL synchronization signal. (4) A time domain position occupied by the twelfth SL synchronization signal is different from a time domain position occupied by the tenth SL synchronization signal. For this part of content, refer to related descriptions of the second SL synchronization signal in the embodiment shown in FIG. 4.

An example in which the frequency domain unit is a channel, priority groups are obtained through grouping based on operating bandwidths, and an SL synchronization signal is an S-SSB is used. Still refer to FIG. 8. A UE 1 operating on a channel 0 to a channel 3 and a UE 4 operating on the channel 2 and the channel 3 first access a network. Because a distance between the UE 1 and the UE 4 is long, and the UE 1 and the UE 4 exceed coverage of each other, the UE 1 selects the UE 1 as a direct synchronization source, the UE 4 selects the UE 4 as a direct synchronization source (in this case, the UE 1 and the UE 4 are also initial synchronization sources), both the UE 1 and the UE 4 send S-SSBs, and both the UE 1 and the UE 4 become SyncRef UEs. A UE 2 operating on the channel 0 and a UE 3 operating on the channel 2 then access the network. Based on the priority groups obtained through grouping in this embodiment of this application, a priority of a priority group corresponding to an operating bandwidth of the UE 1 is higher than a priority of a priority group corresponding to an operating bandwidth of the UE 4. Therefore, both the UE 2 and the UE 3 are synchronized with the UE 1, so that synchronization of more UEs is implemented. After being synchronized with the UE 1, the UE 3 may send an S-SSB. In this case, the S-SSB of the UE 3 may be determined based on an S-SSB from the UE 1. Therefore, a priority of a priority group corresponding to the S-SSB of the UE 3 is higher than a priority of a priority group corresponding to an operating bandwidth of the UE 4. This is equivalent to that the UE 4 receives an S-SSB with a higher priority. In this case, the UE 4 may alternatively be indirectly synchronized with the UE 1. The UE 4 may send S-SSBs on the channel 2 and the channel 3 based on the S-SSB from the UE 3. In this case, the UE 3 can then receive an S-SSB from the UE 4 on the channel 2. If an S-RSRP measured by the UE 3 for the UE 4 is greater than the seventh threshold, the UE 3 may stop sending the S-SSB, to reduce power consumption of the UE 3.

As time goes by, synchronization information carried in the S-SSB sent by the UE 4 may deviate from synchronization information carried in the S-SSB sent by the UE 1. When the deviation is greater than a specific threshold (for example, half a symbol), the UE 3 continues to forward the S-SSB, where the synchronization information is consistent with that of the UE 1, so that the UE 4 can be resynchronized with the UE 3 and the synchronization information of the UE 4 be consistent with the synchronization information of the UE 1.

In this embodiment of this application, if a deviation value of synchronization information indicated by SL synchronization signals with different priorities that are received by the second UE is greater than a specific threshold, the second UE may send an SL synchronization signal based on an SL synchronization signal with a higher priority, so that more UEs can be synchronized with a synchronization source with a higher priority in a uniform manner, to implement global synchronization.

An embodiment of this application provides a fifth communication method. FIG. 13 is a flowchart of the method. The method provided in this embodiment of this application may be applied to the network architecture shown in FIG. 3. For example, a first UE in this embodiment of this application may be the UE 1, the UE 2, or the UE 3 in FIG. 3. The first UE in this embodiment of this application and the first UE in the embodiment shown in FIG. 4 may be a same UE, or may be different UEs.

S1301: When a fourth condition is satisfied, the first UE selects a local clock of the first UE as a synchronization source. For example, the local clock of the first UE is a direct synchronization source of the first UE, and is also an initial synchronization source of the first UE.

The fourth condition includes one or more of the following: the first UE receives (or finds) no SL synchronization signal; the first UE receives no synchronization signal from an access network device and a GNSS; or the first UE receives no SL synchronization signal whose priority of a corresponding priority group is higher than or equal to a priority of a priority group corresponding to an operating bandwidth of the first UE.

That the first UE receives no SL synchronization signal whose priority of the corresponding priority group is higher than or equal to the priority of the priority group corresponding to the operating bandwidth of the first UE may be understood as that the first UE may receive an SL synchronization signal, or may receive no SL synchronization signal. If the first UE receives the SL synchronization signal, a priority of a priority group corresponding to the SL synchronization signal is lower than the priority of the priority group corresponding to the operating bandwidth of the first UE. For descriptions of concepts such as a priority group, refer to the embodiment shown in FIG. 4.

S1302: The first UE sends a thirteenth SL synchronization signal. Optionally, the first UE may send the thirteenth SL synchronization signal in a broadcast, multicast, or unicast manner.

For example, if priority groups are obtained through grouping based on operating bandwidths of UEs (refer to the embodiment shown in FIG. 4), the first UE may select an SLSS ID from a first identity set as an ID of an SLSS sequence included in the thirteenth SL synchronization signal. The first identity set may be an identity set corresponding to the priority group corresponding to the operating bandwidth of the first UE.

Optionally, the thirteenth SL synchronization signal may indicate a hop count. In this case, the hop count is a hop count between the first UE and the first UE, for example, 0. For example, the thirteenth SL synchronization signal may indicate the hop count in the method provided in the embodiment shown in FIG. 4. In other words, the hop count may be indicated by using a synchronization resource occupied by the thirteenth SL synchronization signal, or the hop count may be indicated by using the ID of the SLSS sequence included in the thirteenth SL synchronization signal. For example, the synchronization resource indicates the hop count, and the first UE may select any set of SL synchronization resources from T sets of SL synchronization resources to send the thirteenth SL synchronization signal. Alternatively, to facilitate another UE to then send an SL synchronization signal based on the thirteenth SL synchronization signal, the first UE may select a first set of SL synchronization resources from the T sets of SL synchronization resources to send the thirteenth SL synchronization signal. Alternatively, the thirteenth SL synchronization signal may indicate the hop count in a manner other than the manner provided in the embodiment shown in FIG. 4. For example, the thirteenth SL synchronization signal may carry information indicating the hop count. In addition, the SLSS ID used by the thirteenth SL synchronization signal may be selected, for example, randomly selected, from the identity set corresponding to the priority group corresponding to the operating bandwidth of the first UE.

For another example, the SLSS ID indicates the hop count, and the first UE may select, for example, randomly select, as the SLSS ID used by the thirteenth SL synchronization signal, an SLSS ID from the identity set corresponding to the priority group corresponding to the operating bandwidth of the first UE. In addition, the first UE may select any set of SL synchronization resources from the T sets of SL synchronization resources to send the thirteenth SL synchronization signal.

Optionally, after selecting the first UE as the initial synchronization source and the direct synchronization source, the first UE may further change (or reselect) a direct synchronization source. For example, when a third condition is satisfied, the first UE reselects a synchronization source. For example, the first UE may select a transmit end of a received new SL synchronization signal as the direct synchronization source.

For example, if priority groups are obtained through grouping based on operating bandwidths of UEs, the third condition may include one or more of the following: (1) A fourteenth SL synchronization signal is received, a priority of a priority group corresponding to the fourteenth SL synchronization signal is higher than the priority of the priority group corresponding to the operating bandwidth of the first UE, and a received power obtained by the first UE by measuring a transmit end of the fourteenth SL synchronization signal is greater than a first threshold. (2) A fourteenth SL synchronization signal is received, a priority of a priority group corresponding to the fourteenth SL synchronization signal is the same as the priority of the priority group corresponding to the operating bandwidth of the second UE, and an ID of an SLSS sequence included in the fourteenth SL synchronization signal is smaller than the ID of the SLSS sequence included in the thirteenth SL synchronization signal.

For the 1st condition, refer to the embodiment shown in FIG. 4. For the 2nd condition, it is assumed in this embodiment of this application that for SLSS IDs in a same identity set, a smaller SLSS ID may indicate a higher priority. Therefore, if the ID of the SLSS sequence included in the fourteenth SL synchronization signal is smaller than the ID of the SLSS sequence included in the thirteenth SL synchronization signal, it indicates that the fourteenth SL synchronization signal may have a higher corresponding priority. Therefore, the first UE may select a transmit end of the fourteenth SL synchronization signal as a direct synchronization source.

In this embodiment of this application, a UE that receives no SL synchronization signal or that receives no SL synchronization signal with a high priority can alternatively be used as a synchronization source to send an SL synchronization signal, so that more UEs can be synchronized.

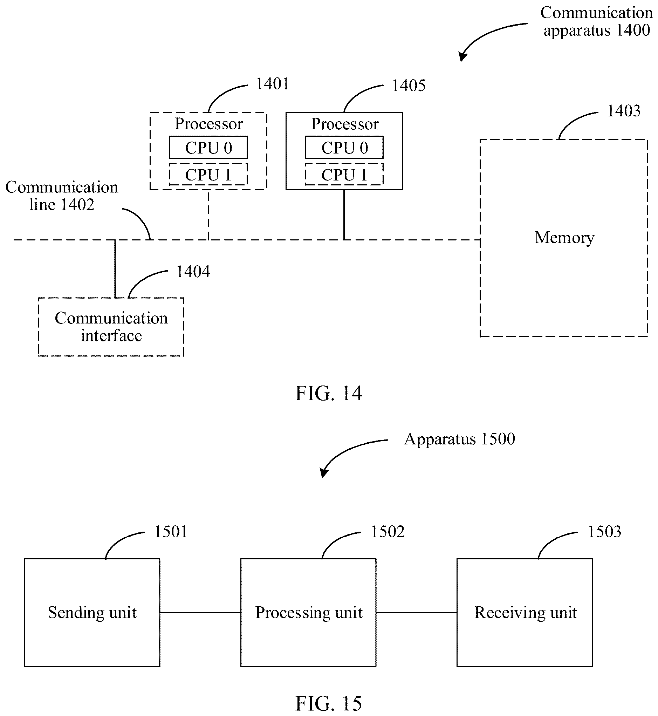

FIG. 14 is a diagram of a structure of a communication apparatus according to an embodiment of this application. The communication apparatus 1400 may be the first UE in the embodiment shown in FIG. 4 or FIG. 13 or a circuit system of the first UE, and is configured to implement the method corresponding to the first UE in the foregoing method embodiments. Alternatively, the communication apparatus 1400 may be the second UE in the embodiment shown in FIG. 9 or FIG. 12 or a circuit system of the second UE, and is configured to implement the method corresponding to the second UE in the foregoing method embodiments. Alternatively, the communication apparatus 1400 may be the third UE in the embodiment shown in FIG. 10 or a circuit system of the third UE, and is configured to implement the method corresponding to the third UE in the foregoing method embodiments. For example, a circuit system is a chip system.

The communication apparatus 1400 includes at least one processor 1401. The processor 1401 may be configured for internal processing of the apparatus, to implement a specific control processing function. Optionally, the processor 1401 includes instructions. Optionally, the processor 1401 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1400 includes one or more memories 1403, configured to store instructions. Optionally, the memory 1403 may further store data. The processor and the memory may be separately disposed, or may be integrated together.

Optionally, the communication apparatus 1400 includes a communication line 1402 and at least one communication interface 1404. Because the memory 1403, the communication line 1402, and the communication interface 1404 are all optional, the memory 1403, the communication line 1402, and the communication interface 1404 are all indicated by dashed lines in FIG. 14.

Optionally, the communication apparatus 1400 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 1400 via the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1401 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1402 may include a path for information transmission between the foregoing components.

The communication interface 1404 is any apparatus like a transceiver, and is configured to communicate with another device or a communication network like an ethernet, a radio access network (radio access network, RAN), a wireless local area network (wireless local area network, WLAN), or a wired access network.

The memory 1403 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, and the like), a magnetic disk storage medium, another magnetic storage device, or any other medium that can carry or store expected program code in a form of an instruction or a data structure and that can be accessed by a computer. However, the memory 1403 is not limited thereto. The memory 1403 may exist independently, and is connected to the processor 1401 through the communication line 1402. Alternatively, the memory 1403 may be integrated with the processor 1401.

The memory 1403 is configured to store computer-executable instructions for executing the solutions of this application, and the processor 1401 controls execution. The processor 1401 is configured to execute the computer-executable instructions stored in the memory 1403, to implement the steps performed by the first UE, the second UE, or the third UE in the embodiment shown in any one of FIG. 4, FIG. 9, FIG. 10, FIG. 12, and FIG. 13.

Optionally, the computer-executable instructions in this embodiment of this application may also be referred to as application program code. This is not specifically limited in this embodiment of this application.

During specific implementation, in an embodiment, the processor 1401 may include one or more CPUs such as a CPU 0 and a CPU 1 in FIG. 14.

During specific implementation, in an embodiment, the communication apparatus 1400 may include a plurality of processors such as the processor 1401 and a processor 1405 in FIG. 14. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 14 is a chip, for example, a chip of the first UE, a chip of the second UE, or a chip of the third UE, the chip includes the processor 1401 (which may further include the processor 1405), the communication line 1402, and the communication interface 1404. Optionally, the chip may include the memory 1403. Specifically, the communication interface 1404 may be an input interface, a pin, a circuit, or the like. The memory 1403 may be a register, a cache, or the like. The processor 1401 and the processor 1405 each may be a general-purpose CPU, a microprocessor, an ASIC, or one or more integrated circuits configured to control program execution of the communication method in any one of the foregoing embodiments.

In this embodiment of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in this embodiment of this application, module division is an example, and is merely logical function division. In actual implementation, another division manner may be used. For example, when each functional module is obtained through division based on each corresponding function, FIG. 15 is a diagram of an apparatus. The apparatus 1500 may be the first UE, the second UE, or the third UE in the foregoing method embodiments, or a chip of the first UE, a chip of the second UE, or a chip of the third UE. The apparatus 1500 includes a sending unit 1501, a processing unit 1502, and a receiving unit 1503.

It should be understood that the apparatus 1500 may be configured to implement the steps performed by the first UE, the second UE, or the third UE in the communication methods in embodiments of this application. For related features, refer to the embodiment shown in any one of FIG. 4, FIG. 9, FIG. 10, FIG. 12, and FIG. 13. Details are not described herein again.

Optionally, functions/implementation processes of the sending unit 1501, the receiving unit 1503, and the processing unit 1502 in FIG. 15 may be implemented by the processor 1401 in FIG. 14 by invoking the computer-executable instructions stored in the memory 1403. Alternatively, a function/implementation process of the processing unit 1502 in FIG. 15 may be implemented by the processor 1401 in FIG. 14 by invoking the computer-executable instructions stored in the memory 1403, and functions/implementation processes of the sending unit 1501 and the receiving unit 1503 in FIG. 15 may be implemented through the communication interface 1404 in FIG. 14.

Optionally, when the apparatus 1500 is a chip or a circuit, functions/implementation processes of the sending unit 1501 and the receiving unit 1503 may alternatively be implemented through a pin, a circuit, or the like.

This application further provides a computer-readable storage medium. The computer-readable storage medium stores a computer program or instructions. When the computer program or the instructions are run, the method performed by the first UE, the second UE, or the third UE in the foregoing method embodiments is implemented. In this way, the functions in the foregoing embodiments may be implemented in a form of a software functional unit and sold or used as an independent product. Based on such an understanding, the technical solutions of this application essentially, the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first UE, the second UE, or the third UE in any one of the foregoing method embodiments.

An embodiment of this application further provides a processing apparatus, including a processor and an interface. The processor is configured to perform the method performed by the first UE, the second UE, or the third UE in any one of the foregoing method embodiments.

All or a part of the foregoing embodiments may be implemented by software, hardware, firmware, or any combination thereof. When the software is used for the implementation, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Various illustrative logic units and circuits described in embodiments of this application may implement or operate the described functions by a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor can read information from the storage medium and write information into the storage medium. Optionally, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may alternatively be loaded onto the computer or another programmable data processing device, so that a series of operation steps are performed on the computer or the another programmable device to generate computer-implemented processing, and instructions executed on the computer or the another programmable device provide steps for implementing a function specified in one or more procedures in the flowchart and/or one or more blocks in the block diagram.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the first UE, and/or the second UE, and/or the third UE may perform a part of or all steps in embodiments of this application. These steps or operations are merely examples. In embodiments of this application, other operations or variations of various operations may be further performed. In addition, the steps may be performed in an order different from an order presented in embodiments of this application, and not all operations in embodiments of this application may be performed.

**Claims**

1. A communication method, applied to a first terminal device or a chip of the first terminal device, wherein the method comprises:

   receiving a first sidelink synchronization signal from a second terminal device in M frequency domain units, wherein the M frequency domain units are a part of all frequency domain units supported by the first terminal device, and M is a positive integer;
   when a first condition is satisfied, selecting the second terminal device as a synchronization source; and
   sending a second sidelink synchronization signal based on the first sidelink synchronization signal.

2. The method according to claim 1, wherein the second sidelink synchronization signal satisfies one or more of the following:

   an identity of a sidelink synchronization signal SLSS sequence comprised in the second sidelink synchronization signal is determined based on an identity of an SLSS sequence comprised in the first sidelink synchronization signal;
   an identity of an SLSS sequence comprised in the second sidelink synchronization signal belongs to an identity set associated with a priority group corresponding to the second sidelink synchronization signal, wherein a priority of the priority group corresponding to the second sidelink synchronization signal is higher than or equal to a priority of a priority group corresponding to the first sidelink synchronization signal; or
   frame synchronization information indicated by the second sidelink synchronization signal is determined based on frame synchronization information indicated by the first sidelink synchronization signal.

3. The method according to claim 2, wherein

   if an operating bandwidth corresponding to the first sidelink synchronization signal is less than or equal to an operating bandwidth of the first terminal device, the priority group corresponding to the second sidelink synchronization signal is a priority group corresponding to the operating bandwidth of the first terminal device; or
   if an operating bandwidth corresponding to the first sidelink synchronization signal is greater than an operating bandwidth of the first terminal device, the priority group corresponding to the second sidelink synchronization signal is the priority group corresponding to the first sidelink synchronization signal.

4. The method according to claim 3, wherein the operating bandwidth corresponding to the first sidelink synchronization signal is determined based on the identity of the SLSS sequence comprised in the first sidelink synchronization signal.

5. The method according to any one of claims 1 to 4, wherein sending the second sidelink synchronization signal comprises:
   sending the second sidelink synchronization signal in N frequency domain units, wherein the N frequency domain units are remaining frequency domain units other than the M frequency domain units in all the frequency domain units supported by the first terminal device, and N is a positive integer.

**6.** The method according to any one of claims 1 to 5, wherein the first condition comprises one or more of the following:

the priority of the priority group corresponding to the first sidelink synchronization signal is higher than a priority of a priority group corresponding to another sidelink synchronization signal received by the first terminal device;
a plurality of sidelink synchronization signals with a highest priority that are received by the first terminal device comprise the first sidelink synchronization signal, and the second terminal device is a device that is with a highest received power and that is determined by the first terminal device by measuring transmit ends of the plurality of sidelink synchronization signals; or
a plurality of sidelink synchronization signals with a highest priority that are received by the first terminal device comprise the first sidelink synchronization signal, and the first sidelink synchronization signal is a sidelink synchronization signal that is in the plurality of sidelink synchronization signals and that indicates a smallest hop count.

**7.** The method according to claim 6, wherein the priority of the priority group corresponding to the first sidelink synchronization signal is higher than or equal to a priority of the priority group corresponding to the operating bandwidth of the first terminal device.

**8.** The method according to claim 6 or 7, wherein a synchronization resource occupied by the first sidelink synchronization signal represents the hop count indicated by the first sidelink synchronization signal.

**9.** The method according to claim 8, wherein the first sidelink synchronization signal occupies an $n^{th}$ synchronization resource in a synchronization period, and the $n^{th}$ synchronization resource occupied by the first sidelink synchronization signal represents that the hop count indicated by the first sidelink synchronization signal is n-1.

**10.** The method according to claim 6 or 7, wherein the identity of the SLSS sequence comprised in the first sidelink synchronization signal represents the hop count indicated by the first sidelink synchronization signal.

**11.** The method according to claim 10, wherein an identity set to which the identity of the SLSS sequence comprised in the first sidelink synchronization signal belongs comprises at least two identity sub-groups, the identity set is an identity set corresponding to an operating bandwidth of an initial synchronization source associated with the first sidelink synchronization signal, the identity of the SLSS sequence comprised in the first sidelink synchronization signal belongs to a first identity sub-group in the at least two identity sub-groups, and different identities comprised in the first identity sub-group indicate different hop counts.

**12.** The method according to any one of claims 1 to 11, wherein the method further comprises:
when a second condition is satisfied, reselecting a synchronization source, wherein the second condition comprises one or more of the following:

a third sidelink synchronization signal is received, a priority of a priority group corresponding to the third sidelink synchronization signal is higher than the priority of the priority group corresponding to the second sidelink synchronization signal, and a received power obtained by the first terminal device by measuring a transmit end of the third sidelink synchronization signal is greater than a first threshold;
a third sidelink synchronization signal is received, a priority of a priority group corresponding to the third sidelink synchronization signal is the same as the priority of the priority group corresponding to the second sidelink synchronization signal, and a difference between a received power obtained by the first terminal device by measuring a transmit end of the third sidelink synchronization signal and a received power obtained by the first terminal device by measuring the second terminal device is greater than a second threshold; or
a received power obtained by the first terminal device by measuring the second terminal device is less than a third threshold.

**13.** The method according to claim 12, wherein the method further comprises:

determining that a received power obtained by the first terminal device by measuring a first synchronization source is greater than a fourth threshold, wherein the first synchronization source is the reselected synchronization source; and
stopping sending the second sidelink synchronization signal.

**14.** The method according to any one of claims 1 to 11, wherein the method further comprises:

receiving a fourth sidelink synchronization signal, wherein a received power obtained by the first terminal device by measuring a transmit end of the fourth sidelink synchronization signal is greater than an eighth threshold, and a priority of a priority group corresponding to the fourth sidelink synchronization signal is higher than the priority of the priority group corresponding to the second sidelink synchronization signal;

stopping sending the second sidelink synchronization signal;

reselecting the transmit end of the fourth sidelink synchronization signal as a synchronization source; and

sending a fifth sidelink synchronization signal based on the fourth sidelink synchronization signal.

15. The method according to claim 14, wherein a received power obtained by the first terminal device by measuring a transmit end of the first sidelink synchronization signal is less than a ninth threshold.

16. The method according to claim 14 or 15, wherein the fifth sidelink synchronization signal satisfies one or more of the following:

an identity of an SLSS sequence comprised in the fifth sidelink synchronization signal is determined based on an identity of an SLSS sequence comprised in the fourth sidelink synchronization signal; and/or

frame synchronization information indicated by the fifth sidelink synchronization signal is determined based on frame synchronization information indicated by the fourth sidelink synchronization signal.

17. The method according to any one of claims 1 to 4, wherein sending the second sidelink synchronization signal comprises:

sending the second sidelink synchronization signal in all the frequency domain units supported by the first terminal device.

18. The method according to claim 17, wherein after sending the second sidelink synchronization signal, the method further comprises:

receiving a sixth sidelink synchronization signal in all the frequency domain units supported by the first terminal device, wherein a priority of a priority group corresponding to the sixth sidelink synchronization signal is higher than or equal to the priority of the priority group corresponding to the second sidelink synchronization signal, and a received power obtained by the first terminal device by measuring a transmit end of the sixth sidelink synchronization signal is greater than a seventh threshold; and

stopping sending the second sidelink synchronization signal.

19. The method according to claim 18, wherein that the priority of the priority group corresponding to the sixth sidelink synchronization signal is higher than or equal to the priority of the priority group corresponding to the second sidelink synchronization signal comprises:

an operating bandwidth corresponding to the sixth sidelink synchronization signal is greater than or equal to an operating bandwidth corresponding to the second sidelink synchronization signal.

20. A communication method, applied to a second terminal device or a chip of the second terminal device, wherein the method comprises:

sending a second sidelink synchronization signal;

receiving a seventh sidelink synchronization signal in all frequency domain units supported by the second terminal device, wherein a priority of a priority group corresponding to the seventh sidelink synchronization signal is higher than or equal to a priority of a priority group corresponding to the second sidelink synchronization signal, and a received power obtained by the second terminal device by measuring a transmit end of the seventh sidelink synchronization signal is greater than a seventh threshold; and

stopping sending the second sidelink synchronization signal.

21. The communication method according to claim 20, wherein that the priority of the priority group corresponding to the seventh sidelink synchronization signal is higher than or equal to the priority of the priority group corresponding to the second sidelink synchronization signal comprises: an operating bandwidth corresponding to the seventh sidelink synchronization signal is greater than or equal to an operating bandwidth corresponding to the second sidelink synchronization signal.

22. A communication method, applied to a third terminal device or a chip of the third terminal device, wherein the method comprises:

receiving an eighth sidelink synchronization signal and a first sidelink synchronization signal, wherein a priority of a priority group corresponding to the eighth sidelink synchronization signal is higher than a priority of a priority group corresponding to the first sidelink synchronization signal, and a received power obtained by the third terminal device by measuring a transmit end of the eighth sidelink synchronization signal is greater than an eighth threshold;

selecting the transmit end of the eighth sidelink synchronization signal as a synchronization source; and

sending a ninth sidelink synchronization signal based on the eighth sidelink synchronization signal.

23. The communication method according to claim 22, wherein that the priority of the priority group corresponding to the eighth sidelink synchronization signal is higher than or equal to the priority of the priority group corresponding to the first sidelink synchronization signal comprises:

an operating bandwidth corresponding to the eighth sidelink synchronization signal is greater than or equal to an operating bandwidth corresponding to the first sidelink synchronization signal.

24. The communication method according to claim 22 or 23, wherein a received power obtained by the third terminal device by measuring the first sidelink synchronization signal is less than a ninth threshold.

25. The communication method according to any one of claims 22 to 24, wherein the ninth sidelink synchronization signal satisfies one or more of the following:

an identity of an SLSS sequence comprised in the ninth sidelink synchronization signal is determined based on an identity of an SLSS sequence comprised in the eighth sidelink synchronization signal; and/or

frame synchronization information indicated by the ninth sidelink synchronization signal is determined based on frame synchronization information indicated by the eighth sidelink synchronization signal.

26. A communication method, applied to a second terminal device or a chip of the second terminal device, wherein the method comprises:

receiving a tenth sidelink synchronization signal and an eleventh sidelink synchronization signal; and

if a difference between a synchronization time domain position indicated by the tenth sidelink synchronization signal and a synchronization time domain position indicated by the eleventh sidelink synchronization signal is greater than a tenth threshold, and a priority of a priority group corresponding to the tenth sidelink synchronization signal is higher than or equal to a priority of a transmit end of the eleventh sidelink synchronization signal, sending a twelfth sidelink synchronization signal in all or a part of frequency domain units supported by the second terminal device.

27. The communication method according to claim 26, wherein that the priority of the priority group corresponding to the tenth sidelink synchronization signal is higher than or equal to a priority of a priority group corresponding to the eleventh sidelink synchronization signal comprises:

an operating bandwidth corresponding to the tenth sidelink synchronization signal is greater than or equal to an operating bandwidth corresponding to the eleventh sidelink synchronization signal.

28. The communication method according to claim 26 or 27, wherein the twelfth sidelink synchronization signal is determined based on the tenth sidelink synchronization signal, wherein

the priority of the priority group corresponding to the tenth sidelink synchronization signal is higher than a priority of a priority group corresponding to the twelfth sidelink synchronization signal; and/or

the priority of the priority group corresponding to the tenth sidelink synchronization signal is equal to the priority of the priority group corresponding to the twelfth sidelink synchronization signal, and a hop count indicated by the tenth sidelink synchronization signal is smaller than a hop count indicated by the twelfth sidelink synchronization signal, wherein

a hop count indicated by a sidelink synchronization signal is a hop count between a transmit end of the sidelink synchronization signal and an initial synchronization source associated with the sidelink synchronization signal.

29. The communication method according to any one of claims 26 to 28, wherein the twelfth sidelink synchronization signal satisfies one or more of the following:

an identity of an SLSS sequence comprised in the twelfth sidelink synchronization signal is determined based on an identity of an SLSS sequence comprised in the tenth sidelink synchronization signal; and/or

frame synchronization information indicated by the twelfth sidelink synchronization signal is determined based on frame synchronization information indicated by the tenth sidelink synchronization signal.

30. The communication method according to any one of claims 26 to 29, wherein a synchronization resource occupied by the tenth sidelink synchronization signal represents the hop count indicated by the tenth sidelink synchronization signal.

31. The communication method according to claim 30, wherein the tenth sidelink synchronization signal occupies an $n^{th}$ synchronization resource in a synchronization period, and the $n^{th}$ synchronization resource occupied by the tenth sidelink synchronization signal represents that the hop count indicated by the tenth sidelink synchronization signal is n-1.

32. The communication method according to any one of claims 26 to 29, wherein the identity of the SLSS sequence comprised in the tenth sidelink synchronization signal represents the hop count indicated by the tenth sidelink synchronization signal.

33. The communication method according to claim 32, wherein an identity set to which the identity of the SLSS sequence comprised in the tenth sidelink synchronization signal belongs comprises at least two identity sub-groups, the identity set is an identity set corresponding to an operating bandwidth of an initial synchronization source associated with the tenth sidelink synchronization signal, the identity of the SLSS sequence comprised in the tenth sidelink synchronization signal belongs to a first identity subgroup in the at least two identity sub-groups, and different identities comprised in the first identity subgroup indicate different hop counts.

34. A communication method, applied to a first terminal device or a chip of the first terminal device, wherein the method comprises:

　　determining that a fourth condition is satisfied;
　　selecting a local clock of the first terminal device as a synchronization source; and
　　sending a thirteenth sidelink synchronization signal, wherein an identity of an SLSS sequence comprised in the thirteenth sidelink synchronization signal is comprised in a first identity set, and the first identity set is an identity set corresponding to a priority group corresponding to an operating bandwidth of the first terminal device.

35. The method according to claim 34, wherein the fourth condition comprises one or more of the following:

　　the first terminal device receives no sidelink synchronization signal;
　　the first terminal device receives no synchronization signal from an access network device and a GNSS; or
　　the first terminal device receives no sidelink synchronization signal whose priority of a corresponding priority group is higher than or equal to a priority of the priority group corresponding to the operating bandwidth of the first terminal device.

36. The method according to claim 34 or 35, wherein the method further comprises:

　　receiving a fourteenth sidelink synchronization signal; and
　　if a priority of a priority group corresponding to the fourteenth sidelink synchronization signal is higher than a priority of a priority group corresponding to the thirteenth sidelink synchronization signal, and a received power obtained by the first terminal device by measuring a transmit end of the fourteenth sidelink synchronization signal is greater than a sixth threshold, selecting the transmit end of the fourteenth sidelink synchronization signal as a synchronization source; or if a priority of a priority group corresponding to the fourteenth sidelink synchronization signal is the same as a priority of a priority group corresponding to the thirteenth sidelink synchronization signal, and an identity of an SLSS sequence comprised in the fourteenth sidelink synchronization signal is smaller than an identity of an SLSS sequence comprised in the eleventh sidelink synchronization signal, selecting a transmit end of the fourteenth sidelink synchronization signal as a synchronization source.

37. A communication apparatus, wherein the communication apparatus comprises a processing unit and a transceiver unit, and the processing unit is coupled to the transceiver unit, to perform the method according to any one of claims 1 to 19, perform the method according to either of claims 20 and 21, perform the method according to any one of claims 22 to 25, perform the method according to any one of claims 26 to 33, or perform the method according to any one of claims 34 to 36.

38. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 19, enable the communication apparatus to perform the method according to either of claims 20 and 21, enable the communication apparatus to perform the method according to any one of claims 22 to 25, enable the communication apparatus to perform the method according to any one of claims 26 to 33, or enable the communication apparatus to perform the method according to any one of claims 34 to 36.

39. A computer-readable storage medium, wherein the computer-readable storage medium is configured to store a computer program; and when the computer program is run on a computer, the computer is enabled to perform the method according to any one of claims 1 to 19, the computer is enabled to perform the method according to either of claims 20 and 21, the computer is enabled to perform the method according to any one of claims 22 to 25, the computer is enabled to perform the method according to any one of claims 26 to 33, or the computer is enabled to perform the method according to any one of claims 34 to 36.

**40.** A computer program product, wherein the computer program product comprises a computer program; and when the computer program is run on a computer, the computer is enabled to perform the method according to any one of claims 1 to 19, the computer is enabled to perform the method according to either of claims 20 and 21, the computer is enabled to perform the method according to any one of claims 22 to 25, the computer is enabled to perform the method according to any one of claims 26 to 33, or the computer is enabled to perform the method according to any one of claims 34 to 36.

**41.** A chip system, wherein the chip system comprises: a processor and an interface, wherein the processor is configured to: invoke instructions from the interface, and run the instructions; and when executing the instructions, the processor implements the method according to any one of claims 1 to 19, implements the method according to either of claims 20 and 21, implements the method according to any one of claims 22 to 25, implements the method according to any one of claims 26 to 33, or implements the method according to any one of claims 34 to 36.

540 MHz

UE 1    UE 2    UE 3    UE 4

FIG. 1

UE 2    | Channel 0 |

                S-SSB

                                The UE 1 cannot keep
                        synchronized with the UE 2 and
                                the UE 3

UE 1    | Channel 0 | Channel 1 | Channel 2 | Channel 3 |

                                The UE 3 cannot find an S-SSB
                                and sends an S-SSB

UE 3                            | Channel 2 |

FIG. 2

UE 1

UE 3

UE 2

FIG. 3

First UE

Second UE

S401: First SL synchronization signal (in M frequency
domain units)

S402: When a first condition
is satisfied, select the second
UE as a synchronization
source

S403: Second SL synchronization signal

S404: When a second
condition is satisfied,
reselect a synchronization
source

FIG. 4

Quantity of SL synchronization time domain
units in the synchronization period

Synchronization period

SL
synchronization
time domain
unit offset

Interval between adjacent
SL synchronization time
domain units

Time

FIG. 5

| 0 | 1 | 2 | ... | P | | | ... | | | ... | | | ... | | | | ... | |
|---|---|---|-----|---|---|---|-----|---|---|-----|---|---|-----|---|---|---|-----|---|

Identity sub-group 1     Identity sub-group 2     Identity sub-group 3     Identity sub-group M

FIG. 6A

| 0 | 1 | ... | M | M+1 | M+2 | ... | 2M | 2M+1 | 2M+2 | ... | 3M | 3M+1 | ... |
|---|---|-----|---|-----|-----|-----|----|------|------|-----|----|------|-----|

Identity sub-group 1       Identity sub-group 2

FIG. 6B

UE 2   | Channel 0 |

↓ S-SSB

UE 1   | Channel 0 | Channel 1 | Channel 2 | Channel 3 |

      S-SSB ↓    S-SSB ↓    S-SSB ↓

The UE 1 sends an S-SSB on a channel on which no S-SSB is found

UE 3                      | Channel 2 |

FIG. 7A

UE 1 | Channel 0 | Channel 1 | Channel 2 | Channel 3

S-SSB    S-SSB    S-SSB    S-SSB

UE 2 | Channel 2

S-SSB

UE 3 | Channel 2

S-SSB (when the UE 4 accesses a network, a local clock of the UE 4 is a synchronization source)

S-SSB

UE 4 | Channel 2 | Channel 3

S-SSB

The UE 4 sends an S-SSB on a channel on which no S-SSB is found

FIG. 7B

UE 2 | Channel 0

S-SSB

UE 1 | Channel 0 | Channel 1 | Channel 2 | Channel 3

S-SSB    S-SSB    S-SSB    S-SSB

The UE 1 sends S-SSBs on all supported channels

UE 3 | Channel 2

FIG. 7C

FIG. 8

FIG. 9

| Third UE | | Second UE | | Fourth UE |

S1001: First SL synchronization signal

S1001: Eighth SL synchronization signal

S1002: Select the fourth UE as a synchronization source

S1003: Ninth SL synchronization signal

**FIG. 10**

| UE 1 | Channel 0 | Channel 1 | Channel 2 | Channel 3 |

S-SSB    S-SSB    S-SSB    S-SSB

The UE 1 sends S-SSBs on all supported channels

| UE 3 | Channel 2 |

S-SSB    S-SSB

| UE 4 | Channel 2 | Channel 3 |

S-SSB

**FIG. 11**

| Second UE | Third UE | Fourth UE |
|---|---|---|

S1201: Tenth SL synchronization signal

S1202: Eleventh SL synchronization signal

S1203a: Determine that a difference between a synchronization time domain position indicated by the tenth SL synchronization signal and a synchronization time domain position indicated by the eleventh SL synchronization signal is greater than a tenth threshold, and that a priority of a priority group corresponding to the tenth SL synchronization signal is higher than or equal to a priority of a priority group corresponding to the eleventh SL synchronization signal

S1203b: Twelfth SL synchronization signal

FIG. 12

When a fourth condition is satisfied, a first UE selects a local clock of the first UE as a synchronization source — S1301

The first UE sends a thirteenth SL synchronization signal — S1302

FIG. 13

Communication
apparatus 1400

1401            1405            1403

Processor        Processor            Memory

CPU 0            CPU 0

CPU 1            CPU 1

Communication
line 1402

1404

Communication
interface

Memory

FIG. 14

Apparatus 1500

1501            1502            1503

Sending unit     Processing unit     Receiving unit

FIG. 15

## INTERNATIONAL SEARCH REPORT

| International application No. |
| --- |
| **PCT/CN2024/077413** |

### A. CLASSIFICATION OF SUBJECT MATTER

H04W 56/00(2009.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, CNKI, VEN, ENTXT, 3GPP: 边, 侧, 链路, 同步, 源, 优先级, 门限, 阈值, 时钟, sidelink, synchronization, source, priority, threshold, clock

### C. DOCUMENTS CONSIDERED TO BE RELEVANT

| Category* | Citation of document, with indication, where appropriate, of the relevant passages | Relevant to claim No. |
| --- | --- | --- |
| X | CN 114143867 A (INNOVATIVE TECHNOLOGY LAB CO., LTD.) 04 March 2022 (2022-03-04) description, paragraphs 23-296, and figures 1-9 | 1-11, 17, 22-35, 37-41 |
| A | CN 108476482 A (HUAWEI TECHNOLOGIES CO., LTD.) 31 August 2018 (2018-08-31) entire document | 1-41 |
| A | WO 2020091264 A1 (SAMSUNG ELECTRONICS CO., LTD.) 07 May 2020 (2020-05-07) entire document | 1-41 |
| A | WO 2021080372 A1 (LG ELECTRONICS INC.) 29 April 2021 (2021-04-29) entire document | 1-41 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 May 2024** | **22 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/077413** |

| Patent document cited in search report | | | Publication date (day/month/year) | Patent family member(s) | | | Publication date (day/month/year) |
| --- | --- | --- | --- | --- | --- | --- | --- |
| CN | 114143867 | A | 04 March 2022 | WO | 2017171487 | A2 | 05 October 2017 |
| | | | | WO | 2017171487 | A3 | 23 August 2018 |
| | | | | PL | 3437245 | T3 | 29 August 2022 |
| | | | | EP | 4033712 | A1 | 27 July 2022 |
| | | | | ES | 2920953 | T3 | 12 August 2022 |
| | | | | KR | 20220156782 | A | 28 November 2022 |
| | | | | EP | 3437245 | A2 | 06 February 2019 |
| | | | | EP | 3437245 | A4 | 04 December 2019 |
| | | | | EP | 3437245 | B1 | 27 April 2022 |
| | | | | KR | 20170112799 | A | 12 October 2017 |
| | | | | KR | 102467752 | B1 | 16 November 2022 |
| | | | | US | 2022279464 | A1 | 01 September 2022 |
| | | | | US | 2017289935 | A1 | 05 October 2017 |
| | | | | US | 11363546 | B2 | 14 June 2022 |
| CN | 108476482 | A | 31 August 2018 | US | 2018352525 | A1 | 06 December 2018 |
| | | | | US | 10925026 | B2 | 16 February 2021 |
| | | | | JP | 2018537026 | A | 13 December 2018 |
| | | | | JP | 6816857 | B2 | 20 January 2021 |
| | | | | WO | 2017124338 | A1 | 27 July 2017 |
| | | | | KR | 20180072746 | A | 29 June 2018 |
| | | | | EP | 3355628 | A1 | 01 August 2018 |
| | | | | EP | 3355628 | A4 | 05 December 2018 |
| | | | | EP | 3355628 | B1 | 26 July 2023 |
| WO | 2020091264 | A1 | 07 May 2020 | KR | 20200050288 | A | 11 May 2020 |
| | | | | US | 2022015047 | A1 | 13 January 2022 |
| | | | | US | 11974241 | B2 | 30 April 2024 |
| | | | | EP | 3860238 | A1 | 04 August 2021 |
| | | | | EP | 3860238 | A4 | 22 December 2021 |
| WO | 2021080372 | A1 | 29 April 2021 | US | 2022417872 | A1 | 29 December 2022 |
| | | | | KR | 20220066955 | A | 24 May 2022 |
| | | | | KR | 102529773 | B1 | 09 May 2023 |

Form PCT/ISA/210 (patent family annex) (July 2022)

**EP 4 651 584 A1**

**Patent documents cited in the description**

- CN 202310170983

- CN 202310417897